(19) **Europäisches Patentamt European Patent Office Office européen des brevets**

(11) **EP 4 319 021 B1**

(12) **EUROPEAN PATENT SPECIFICATION**

(45) Date of publication and mention of the grant of the patent:
**03.06.2026 Bulletin 2026/23**

(21) Application number: **22784973.4**

(22) Date of filing: **06.04.2022**

(51) International Patent Classification (IPC):
$H04L\ 5/00^{(2006.01)}$    $H04L\ 1/08^{(2006.01)}$
$H04W\ 72/04^{(2023.01)}$    $H04W\ 72/12^{(2023.01)}$
$H04W\ 56/00^{(2009.01)}$    $H04W\ 72/1268^{(2023.01)}$

(52) Cooperative Patent Classification (CPC):
**H04W 72/1268; H04L 5/00; H04L 5/0048; H04L 5/0051; H04L 5/0053; H04W 56/0045**

(86) International application number:
**PCT/KR2022/004990**

(87) International publication number:
**WO 2022/216064 (13.10.2022 Gazette 2022/41)**

(54) **METHOD FOR TRANSMITTING AND RECEIVING PUSCH IN WIRELESS COMMUNICATION SYSTEM, AND DEVICE THEREFOR**

VERFAHREN ZUM SENDEN UND EMPFANGEN VON PUSCH IN EINEM DRAHTLOSKOMMUNIKATIONSSYSTEM UND VORRICHTUNG DAFÜR

PROCÉDÉ DE TRANSMISSION ET DE RÉCEPTION DE PUSCH DANS UN SYSTÈME DE COMMUNICATION SANS FIL, ET DISPOSITIF CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.04.2021 KR 20210044778**
         **12.05.2021 KR 20210061178**

(43) Date of publication of application:
**07.02.2024 Bulletin 2024/06**

(73) Proprietor: **LG Electronics Inc.**
**Yeongdeungpo-gu**
**Seoul 07336 (KR)**

(72) Inventors:
- **SHIM, Jaenam**
  **Seoul 06772 (KR)**
- **KIM, Kijun**
  **Seoul 06772 (KR)**
- **KO, Hyunsoo**
  **Seoul 06772 (KR)**
- **YANG, Suckchel**
  **Seoul 06772 (KR)**
- **YOU, Hyangsun**
  **Seoul 06772 (KR)**
- **HWANG, Seunggye**
  **Seoul 06772 (KR)**
- **BAE, Duckhyun**
  **Seoul 06772 (KR)**

(74) Representative: **Plasseraud IP**
**104 Rue de Richelieu**
**CS92104**
**75080 Paris Cedex 02 (FR)**

(56) References cited:
**WO-A1-2020/034577**    **US-A1- 2019 159 181**
**US-A1- 2020 186 310**

- **INTERDIGITAL INC: "Discussions on joint channel estimation for PUSCH", vol. RAN WG1, no. e-Meeting; 20210125 - 20210205, 19 January 2021 (2021-01-19), XP051971176, Retrieved from the Internet <URL:https://ftp.3gpp.org/tsg_ran/ WG1_RL1/TSGR1_104-e/Docs/R1-2100733.zip R1-2100733_104e_COV_AI8813_PUSCH_DMRS-BUNDLE_FINAL.docx> [retrieved on 20210119]**

EP 4 319 021 B1

- CATT: "Joint channel estimation for PUSCH", vol. RAN WG1, no. e-Meeting; 20210125 - 20210205, 19 January 2021 (2021-01-19), XP051971002, Retrieved from the Internet <URL:https://ftp.3gpp.org/tsg_ran/WG1_RL1/TSGR1_104-e/Docs/R1-2100399.zip R1-2100399.docx> [retrieved on 20210119]
- MODERATOR (CHINA TELECOM): "[104-e-NR-CovEnh-03] Summary of email discussion on joint channel estimation for PUSCH", 3GPP DRAFT; R1-2102161, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. E-Meeting; 20210125 - 20210205, 8 February 2021 (2021-02-08), Mobile Competence Centre ; 650, route des Lucioles ; F-06921 Sophia-Antipolis Cedex ; France
, XP051977732
- VIVO: "Discussion on Joint channel estimation for PUSCH", 3GPP DRAFT; R1-2100459, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210125 - 20210205, 18 January 2021 (2021-01-18), Mobile Competence Centre ; 650, route des Lucioles ; F-06921 Sophia-Antipolis Cedex ; France
, XP051970381

**Description**

[Technical Field]

The present disclosure relates to a wireless communication system, and more particularly to a method of transmitting and a method of receiving a physical uplink shared channel (PUSCH) and a user equipment.

[Background Art]

Mobile communication systems have been developed to provide a voice service while ensuring the activity of a user.

However, the area of the mobile communication systems has extended to a data service in addition to a voice. Due to the current explosive increase in traffic, there is a shortage of resources, and thus users demand a higher speed service. Accordingly, there is a need for a more advanced mobile communication system.

Requirements for next-generation mobile communication systems need to able to support the accommodation of explosive data traffic, a dramatic increase in data rate per user terminal, the accommodation of a significant increase in the number of connected devices, very low end-to-end latency, and high-energy efficiency. To this end, studies have been conducted on various technologies such as dual connectivity, massive multiple input multiple output (MIMO), in-band full duplex, non-orthogonal multiple access (NOMA), super wideband support, and device networking.

Meanwhile, for the purpose of coverage enhancement, techniques for maximizing channel estimation performance are being discussed. Document: INTERDIGITAL INC: "Discussions on joint channel estimation for PUSCH", 3GPP DRAFT; R1-2100733, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210125 - 20210205 19 January 2021 (2021-01-19), URL:https://ftp.3gpp.org/tsg_ran/WG1_RL1/TSGR1_104-e/Docs/ R1-2100733.zipR1-2100733_104e_ COV Al8813 PUSCH DM RSBU NDLE FINAL.docx relates to channel estimation for PUSCH. Document: CATT: "Joint channel estimation for PUSCH", 3GPP DRAFT; R1-2100399, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210125 - 20210205 19 January 2021 (2021-01-19), URL:https://ftp.3gpp.org/tsg_ran/WG1_RL1/TSGR1_104-e/Docs/ R1-2100399.zip R1-2100399.docx, relates to channel estimation for PUSCH. Document: Moderator (China Telecom): "[104-e-NR-CovEnh-03] Summary of email discussion on joint channel estimation for PUSCH",3GPP Draft; R1-2102161, 3rd Generation Partnership Project (3GPP), Mobile Competence Centre ; 650, route des Lucioles ; F-06921 Sophia-Antipolis Cedex ; France, vol. RAN WG1, no. E-Meeting; 2021 01 25 - 20210205, 8 February 2021 (2021-02-08), Mobile Competence Centre ; 650, route des Lucioles ; F-06921 Sophia-Antipolis Cedex ; France, also relates to channel estimation for PUSCH.

[Disclosure]

[Technical Problem]

The present disclosure proposes methods and a device for indicating when a change in transmission characteristics occurs in a time domain window for demodulation reference signal (DMRS) bundling (or inter-slot bundling).

In addition, the present disclosure proposes methods and a device for distinguishing time domain windows when a change in transmission characteristics occurs in a time domain window for DMRS bundling (or inter-slot bundling).

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[Technical Solution]

Aspects of the invention provide a method according to claim 1, a UE according to claim 7 and a method according to claim 8.

In addition, in the above method of the present disclosure, the DMRS in the slot and a DMRS of a previous slot may have a preconfigured phase difference.

In addition, in the above method of the present disclosure, the previous slot may be included in the plurality of slots.

In addition, in the above method of the present disclosure, the first time domain window and/or the second time domain window may be time domain windows for DMRS bundling.

In addition, in the above method of the present disclosure, based on the length of the time domain window being configured as n slots, the second time domain window may end at an n-th slot from the slot, or may end at an n-th slot from a starting slot of the time domain window.

In addition, in the above method of the present disclosure, the same phase and transmission power may be maintained in the first time domain window or the second time domain window.

[Advantageous Effects]

According to the present disclosure, when a change in transmission characteristics occurs in the time domain window for DMRS bundling (or inter-slot bundling), there is an effect of improving channel estimation performance by indicating this.

In addition, according to the present disclosure, when a change in transmission characteristics occurs in the time domain window for DMRS bundling (or inter-slot bundling), there is an effect of improving channel estimation performance by distinguishing the time domain window.

Effects which can be obtained in the present disclosure are not limited to the effects mentioned above and other effects not mentioned will be clearly understood by those skilled in the art to which the present disclosure pertains from the description below.

[Description of Drawings]

The accompanying drawings, which are included to provide a further understanding of the present disclosure and constitute a part of the detailed description, illustrate embodiments of the present disclosure and serve to explain technical features of the present disclosure together with the description.

FIG. 1 illustrates an example of an overall system structure of NR to which a method described in the present disclosure is applicable.

FIG. 2 illustrates a relationship between an uplink frame and a downlink frame in a wireless communication system to which a method described in the present disclosure is applicable.

FIG. 3 illustrates an example of a frame structure in an NR system.

FIG. 4 illustrates an example of a resource grid supported by a wireless communication system to which a method described in the present disclosure is applicable.

FIG. 5 illustrates a slot structure of an NR frame to which a method described in the present disclosure is applicable.

FIG. 6 illustrates examples of a resource grid per antenna port and numerology to which a method described in the present disclosure is applicable.

FIG. 7 illustrates physical channels and general signal transmission used in a 3GPP system.

FIG. 8 shows an example of PUSCH repetition type A

FIG. 9 shows an example of PUSCH repetition type B.

FIG. 10 shows DMRS location according to mapping type and number of OFDM symbols.

FIG. 11 shows an example of mapping of double symbol DMRS.

FIG. 12 is a diagram for explaining Method 6-1.

FIG. 13 is a diagram for explaining Method 6-3.

FIG. 14 is a flowchart to explain an operation method of a UE proposed in the present disclosure.

FIG. 15 is a flowchart for explaining an operation method of a base station proposed in the present disclosure.

FIG. 16 illustrates a communication system (1) applied to the present disclosure.

FIG. 17 illustrates a wireless device applicable to the present disclosure.

FIG. 18 illustrates another example of a wireless device applied to the present disclosure.

FIG. 19 illustrates a portable device applied to the present disclosure.

[Mode for Invention]

Reference will now be made in detail to embodiments of the disclosure, examples of which are illustrated in the accompanying drawings. A detailed description to be disclosed below together with the accompanying drawing is to describe exemplary embodiments of the disclosure and not to describe a unique embodiment for carrying out the disclosure. The detailed description below includes details to provide a complete understanding of the disclosure. However, those skilled in the art know that the disclosure may be carried out without the details.

In some cases, in order to prevent a concept of the disclosure from being ambiguous, known structures and devices may be omitted or illustrated in a block diagram format based on core functions of each structure and device.

Hereinafter, downlink (DL) means communication from the base station to the terminal and uplink (UL) means communication from the terminal to the base station. In downlink, a transmitter may be part of the base station, and a receiver may be part of the terminal. In downlink, the transmitter may be part of the terminal and the receiver may be part of the terminal. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

The following technology may be used in various radio access system including CDMA, FDMA, TDMA, OFDMA, SC-FDMA, and the like. The CDMA may be implemented as radio technology such as Universal Terrestrial Radio Access (UTRA) or CDMA2000. The TDMA may be implemented as radio technology such as a global system for mobile communications (GSM)/general packet radio service (GPRS)/enhanced data rates for GSM evolution (EDGE). The OFDMA may be implemented as radio technology such as Institute of Electrical and Electronics Engineers (IEEE) 802.11 (Wi-Fi), IEEE 802.16 (WiMAX), IEEE 802.20, Evolved UTRA (E-UTRA), or the like. The UTRA is a part of Universal Mobile Telecommunications System (UMTS). 3rd Generation Partnership Project (3GPP) Long Term Evolution (LTE) is a part of Evolved UMTS (E-UMTS) using the E-UTRA and LTE-Advanced (A)/LTE-A pro is an evolved version of the 3GPP LTE. 3GPP NR (New Radio or New Radio Access Technology) is an evolved version of the 3GPP LTE/LTE-A/LTE-A pro.

For clarity of description, the disclosure is described based on the 3GPP communication system (e.g., LTE-A or NR), but the disclosure is not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The LTE/NR may be referred to as a 3GPP system. "xxx" means a standard document detail number. Matters disclosed in a standard document opened before the disclosure may be referred to for a background art, terms, abbreviations, etc., used for describing the disclosure. For example, the following documents may be referred to.

3GPP LTE

- 36.211: Physical channels and modulation
- 36.212: Multiplexing and channel coding
- 36.213: Physical layer procedures
- 36.300: Overall description
- 36.331: Radio Resource Control (RRC)

3GPP NR

- 38.211: Physical channels and modulation
- 3 8.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

As more and more communication devices require larger communication capacity, there is a need for improved mobile broadband communication compared to the existing radio access technology (RAT). Further, massive machine type communications (MTCs), which provide various services anytime and anywhere by connecting many devices and objects, are one of the major issues to be considered in the next generation communication. In addition, a communication system design considering a service/UE sensitive to reliability and latency is being discussed. The introduction of next generation radio access technology considering enhanced mobile broadband communication (eMBB), massive MTC (mMTC), ultra-reliable and low latency communication (URLLC) is discussed, and in the disclosure, the technology is called new RAT for convenience. The NR is an expression representing an example of 5G radio access technology (RAT).

Three major requirement areas of 5G include (1) an enhanced mobile broadband (eMBB) area, (2) a massive machine type communication (mMTC) area and (3) an ultra-reliable and low latency communications (URLLC) area.

Some use cases may require multiple areas for optimization, and other use case may be focused on only one key performance indicator (KPI). 5G support such various use cases in a flexible and reliable manner.

eMBB is far above basic mobile Internet access and covers media and entertainment applications in abundant bidirectional tasks, cloud or augmented reality. Data is one of key motive powers of 5G, and dedicated voice services may not be first seen in the 5G era. In 5G, it is expected that voice will be processed as an application program using a data connection simply provided by a communication system. Major causes for an increased traffic volume include an increase in the content size and an increase in the number of applications that require a high data transfer rate. Streaming service (audio and video), dialogue type video and mobile Internet connections will be used more widely as more devices are connected to the Internet. Such many application programs require connectivity always turned on in order to push real-time information and notification to a user. A cloud storage and application suddenly increases in the mobile communication platform, and this may be applied to both business and entertainment. Furthermore, cloud storage is a special use case that tows the growth of an uplink data transfer rate. 5G is also used for remote business of cloud. When a tactile interface is used, further lower end-to-end latency is required to maintain excellent user experiences. Entertainment, for example, cloud game and video streaming are other key elements which increase a need for the mobile broadband ability. Entertainment is essential in the smartphone and tablet anywhere including high mobility environments, such as a train, a vehicle and an airplane. Another use case is augmented reality and information search for entertainment. In this case, augmented reality requires very low latency and an instant amount of data.

Furthermore, one of the most expected 5G use case relates to a function capable of smoothly connecting embedded sensors in all fields, that is, mMTC. Until 2020, it is expected that potential IoT devices will reach 20.4 billions. The industry IoT is one of areas in which 5G performs major roles enabling smart city, asset tracking, smart utility, agriculture and security infra.

URLLC includes a new service which will change the industry through remote control of major infra and a link having ultra-reliability/low available latency, such as a self-driving vehicle. A level of reliability and latency is essential for smart grid control, industry automation, robot engineering, drone control and adjustment.

Multiple use cases are described more specifically.

5G may supplement fiber-to-the-home (FTTH) and cable-based broadband (or DOCSIS) as means for providing a stream evaluated from gigabits per second to several hundreds of megabits per second. Such fast speed is necessary to deliver TV with resolution of 4K or more (6K, 8K or more) in addition to virtual reality and augmented reality. Virtual reality (VR) and augmented reality (AR) applications include immersive sports games. A specific application program may require a special network configuration. For example, in the case of VR game, in order for game companies to minimize latency, a core server may need to be integrated with the edge network server of a network operator.

An automotive is expected to be an important and new motive power in 5G, along with many use cases for the mobile communication of an automotive. For example, entertainment for a passenger requires a high capacity and a high mobility mobile broadband at the same time. The reason for this is that future users continue to expect a high-quality connection regardless of their location and speed. Another use example of the automotive field is an augmented reality dashboard. The augmented reality dashboard overlaps and displays information, identifying an object in the dark and notifying a driver of the distance and movement of the object, over a thing seen by the driver through a front window. In the future, a wireless module enables communication between automotives, information exchange between an automotive and a supported infrastructure, and information exchange between an automotive and other connected devices (e.g., devices accompanied by a pedestrian). A safety system guides alternative courses of a behavior so that a driver can drive more safely, thereby reducing a danger of an accident. A next step will be a remotely controlled or self-driven vehicle. This requires very reliable, very fast communication between different self-driven vehicles and between an automotive and infra. In the future, a self-driven vehicle may perform all driving activities, and a driver will be focused on things other than traffic, which cannot be identified by an automotive itself. Technical requirements of a self-driven vehicle require ultra-low latency and ultra-high speed reliability so that traffic safety is increased up to a level which cannot be achieved by a person.

A smart city and smart home mentioned as a smart society will be embedded as a high-density radio sensor network. The distributed network of intelligent sensors will identify the cost of a city or home and a condition for energy-efficient maintenance. A similar configuration may be performed for each home. All of a temperature sensor, a window and heating controller, a burglar alarm and home appliances are wirelessly connected. Many of such sensors are typically a low data transfer rate, low energy and a low cost. However, for example, real-time HD video may be required for a specific type of device for surveillance.

The consumption and distribution of energy including heat or gas are highly distributed and thus require automated control of a distributed sensor network. A smart grid collects information, and interconnects such sensors using digital information and a communication technology so that the sensors operate based on the information. The information may include the behaviors of a supplier and consumer, and thus the smart grid may improve the distribution of fuel, such as electricity, in an efficient, reliable, economical, production-sustainable and automated manner. The smart grid may be considered to be another sensor network having small latency.

A health part owns many application programs which reap the benefits of mobile communication. A communication system can support remote treatment providing clinical treatment at a distant place. This helps to reduce a barrier for the distance and can improve access to medical services which are not continuously used at remote farming areas. Furthermore, this is used to save life in important treatment and an emergency condition. A radio sensor network based on mobile communication can provide remote monitoring and sensors for parameters, such as the heart rate and blood pressure.

Radio and mobile communication becomes increasingly important in the industry application field. Wiring requires a high installation and maintenance cost. Accordingly, the possibility that a cable will be replaced with reconfigurable radio links is an attractive opportunity in many industrial fields. However, to achieve the possibility requires that a radio connection operates with latency, reliability and capacity similar to those of the cable and that management is simplified. Low latency and a low error probability is a new requirement for a connection to 5G.

Logistics and freight tracking is an important use case for mobile communication, which enables the tracking inventory and packages anywhere using a location-based information system. The logistics and freight tracking use case typically requires a low data speed, but a wide area and reliable location information.

In a new RAT system including NR uses an OFDM transmission scheme or a similar transmission scheme thereto. The new RAT system may follow OFDM parameters different from OFDM parameters of LTE. Alternatively, the new RAT system may follow numerology of conventional LTE/LTE-A as it is or have a larger system bandwidth (e.g., 100 MHz). Alternatively, one cell may support a plurality of numerologies. In other words, UEs that operate with different numerologies may coexist in one cell.

The numerology corresponds to one subcarrier spacing in a frequency domain. Different numerologies may be defined by scaling reference subcarrier spacing to an integer N.

Definition of Terms

eLTE eNB: The eLTE eNB is the evolution of eNB that supports connectivity to EPC and NGC.

gNB: A node which supports the NR as well as connectivity to NGC.

New RAN: A radio access network which supports either NR or E-UTRA or interfaces with the NGC.

Network slice: A network slice is a network created by the operator customized to provide an optimized solution for a specific market scenario which demands specific requirements with end-to-end scope.

Network function: A network function is a logical node within a network infrastructure that has well-defined external interfaces and well-defined functional behavior.

NG-C: A control plane interface used on NG2 reference points between new RAN and NGC.

NG-U: A user plane interface used on NG3 references points between new RAN and NGC.

Non-standalone NR: A deployment configuration where the gNB requires an LTE eNB as an anchor for control plane connectivity to EPC, or requires an eLTE eNB as an anchor for control plane connectivity to NGC.

Non-standalone E-UTRA: A deployment configuration where the eLTE eNB requires a gNB as an anchor for control plane connectivity to NGC.

User plane gateway: A termination point of NG-U interface.

Overview of system

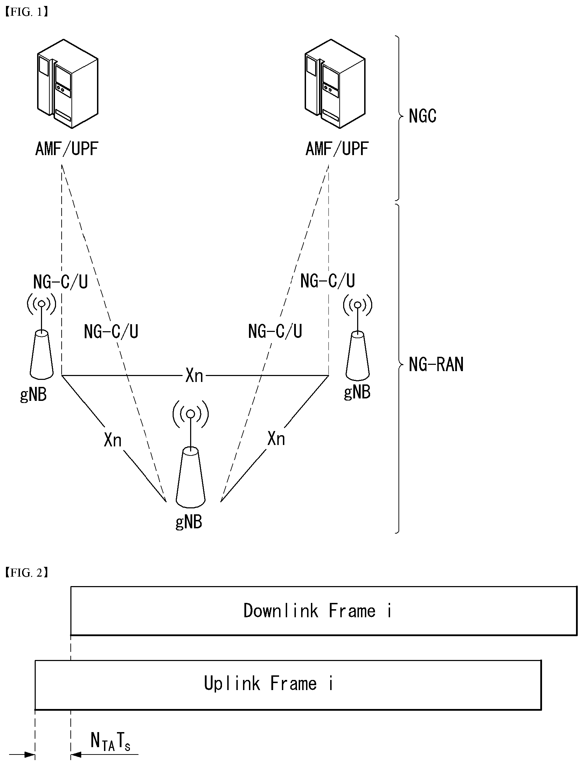

FIG. 1 illustrates an example of an overall structure of an NR system to which a method proposed in the disclosure may be applied.

Referring to FIG. 1, an NG-RAN is configured with an NG-RA user plane (new AS sublayer/PDCP/RLC/MAC/-PHY) and gNBs which provide a control plane (RRC) protocol end for a user equipment (UE).

The gNBs are interconnected through an Xn interface.

The gNBs are also connected to an NGC through an NG interface.

More specifically the gNBs are connected to an access and mobility management function (AMF) through an N2 interface and to a user plane function (UPF) through an N3 interface.

**NR (New Rat) Numerology and Frame Structure**

In the NR system, multiple numerologies may be supported. The numerologies may be defied by subcarrier spacing and a CP (Cyclic Prefix) overhead. Spacing between the plurality of subcarriers may be derived by scaling basic subcarrier spacing into an integer N (or $\mu$). In addition, although a very low subcarrier spacing is assumed not to be used at a very high subcarrier frequency, a numerology to be used may be selected independent of a frequency band.

In addition, in the NR system, a variety of frame structures according to the multiple numerologies may be supported.

Hereinafter, an orthogonal frequency division multiplexing (OFDM) numerology and a frame structure, which may be considered in the NR system, will be described.

A plurality of OFDM numerologies supported in the NR system may be defined as in Table 1.

[Table 1]

| $\mu$ | $\Delta f = 2^{\mu} \cdot 15$ [kHz] | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

The NR supports multiple numerologies (or subcarrier spacing (SCS)) for supporting various 5G services. For example, when the SCS is 15 kHz, a wide area in traditional cellular bands is supported and when the SCS is 30 kHz/60 kHz, dense-urban, lower latency, and wider carrier bandwidth are supported, and when the SCS is more than 60 kHz, a bandwidth larger than 24.25 GHz is supported in order to overcome phase noise.

An NR frequency band is defined as two types of frequency ranges (FR1 and FR2). FR1 and FR2 may be configured as shown in Table 2 below. Further, FR2 may mean a millimeter wave (mmW).

[Table 2]

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As described above, the numerical values of the frequency range of the NR system may be changed. For example, FR1 may include a band of 410 MHz to 7125 MHz as shown in Table 3 below. That is, FR1 may include a frequency band of 6GHz (or 5850, 5900, 5925 MHz, etc.). For example, the frequency band above 6 GHz (or 5850, 5900, 5925 MHz, etc.) included within FR1 may include an unlicensed band. The unlicensed bands may be used for a variety of purposes, for example, and for communications for vehicles (e.g. autonomous driving).

[Table 3]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in the NR system, a size of various fields in the time domain is expressed as a multiple of a time unit of $T_s = 1/(\Delta f_{max} \cdot N_f)$. In this case, $\Delta f_{max} = 480 \cdot 10^3$, and $N_f = 4096$. DL and UL transmission is configured as a radio frame having a section of $T_f = (\Delta f_{max} N_f/100) \cdot T_s = 10$ms. The radio frame is composed of ten subframes each having a section of $T_{sf} = (\Delta f_{max} N_f/1000) \cdot T_s = 1$ms. In this case, there may be a set of UL frames and a set of DL frames.

FIG. 2 illustrates the relation between an uplink frame and a downlink frame in a wireless communication system to which a method proposed in the disclosure may be applied.

As illustrated in FIG. 2, uplink frame number i for transmission from a user equipment (UE) shall start $T_{TA} = N_{TA} T_s$ before the start of a corresponding downlink frame at the corresponding UE.

Regarding the numerology $\mu$, slots are numbered in increasing order of $n_s^{\mu} \in \left\{0,..., N_{subframe}^{slots,\mu} - 1\right\}$ within a subframe and are numbered in increasing order of $n_{s,f}^{\mu} \in \left\{0,..., N_{frame}^{slots,\mu} - 1\right\}$ within a radio frame. One slot consists of consecutive OFDM symbols of $N_{\text{symb}}^{\mu}$, and $N_{\text{symb}}^{\mu}$ is determined depending on a numerology used and slot configuration. The start of slots $n_s^{\mu}$ in a subframe is aligned in time with the start of OFDM symbols $n_s^{\mu} N_{\text{symb}}^{\mu}$ in the same subframe.

Not all UEs are able to transmit and receive at the same time, and this means that not all OFDM symbols in a downlink slot or an uplink slot are available to be used.

Table 4 represents the number $N_{\text{symb}}^{\text{slot}}$ of OFDM symbols per slot, the number $N_{\text{slot}}^{\text{frame}, \mu}$ of slots per radio frame, and the number $N_{\text{slot}}^{\text{subframe}, \mu}$ of slots per subframe in a normal CP. Table 5 represents the number of OFDM symbols per slot, the number of slots per radio frame, and the number of slots per subframe in an extended CP.

[Table 4]

| $\mu$ | $N_{\text{symb}}^{\text{slot}}$ | $N_{\text{slot}}^{\text{frame}, \mu}$ | $N_{\text{slot}}^{\text{subframe}, \mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 5]

| $\mu$ | $N_{\text{symb}}^{\text{slot}}$ | $N_{\text{slot}}^{\text{frame}, \mu}$ | $N_{\text{slot}}^{\text{subframe}, \mu}$ |
|---|---|---|---|
| 2 | 12 | 40 | 4 |

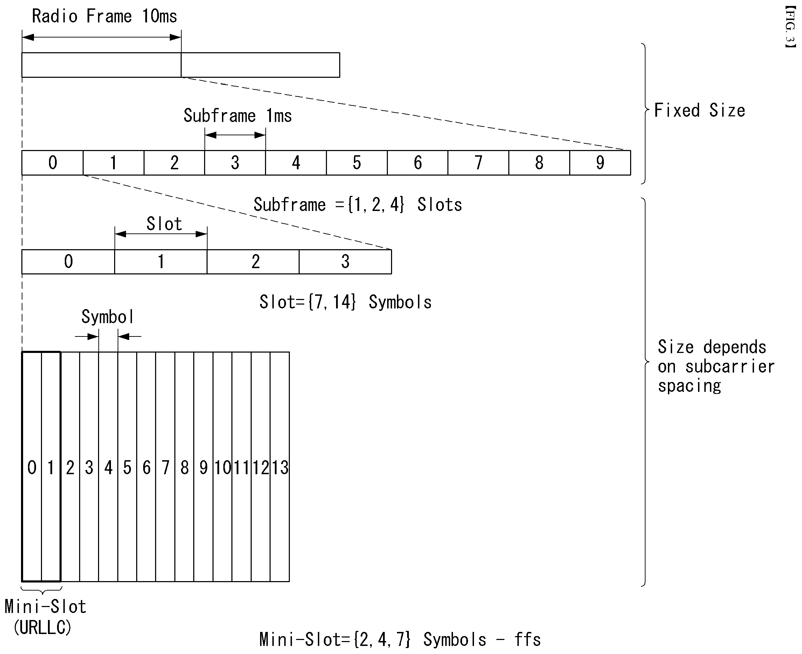

FIG. 3 illustrates an example of a frame structure in a NR system. FIG. 3 is merely for convenience of explanation and does not limit the scope of the disclosure.

In Table 5, in case of $\mu$ =2, i.e., as an example in which a subcarrier spacing (SCS) is 60 kHz, one subframe (or frame) may include four slots with reference to Table 4, and one subframe = {1, 2, 4} slots shown in FIG. 3, for example, the number of slot(s) that may be included in one subframe may be defined as in Table 3.

Further, a mini-slot may consist of 2, 4, or 7 symbols, or may consist of more symbols or less symbols.

In relation to physical resources in the NR system, an antenna port, a resource grid, a resource element, a resource block, a carrier part, etc., may be considered.

Hereinafter, the above physical resources that may be considered in the NR system are described in more detail.

First, in relation to an antenna port, the antenna port is defined so that a channel over which a symbol on an antenna port is conveyed may be inferred from a channel over which another symbol on the same antenna port is conveyed. When large-scale properties of a channel over which a symbol on one antenna port is conveyed may be inferred from a channel over which a symbol on another antenna port is conveyed, the two antenna ports may be regarded as being in a quasi co-located or quasi co-location (QC/QCL) relation. In this case, the large-scale properties may include at least one of delay spread, Doppler spread, frequency shift, average received power, and received timing.

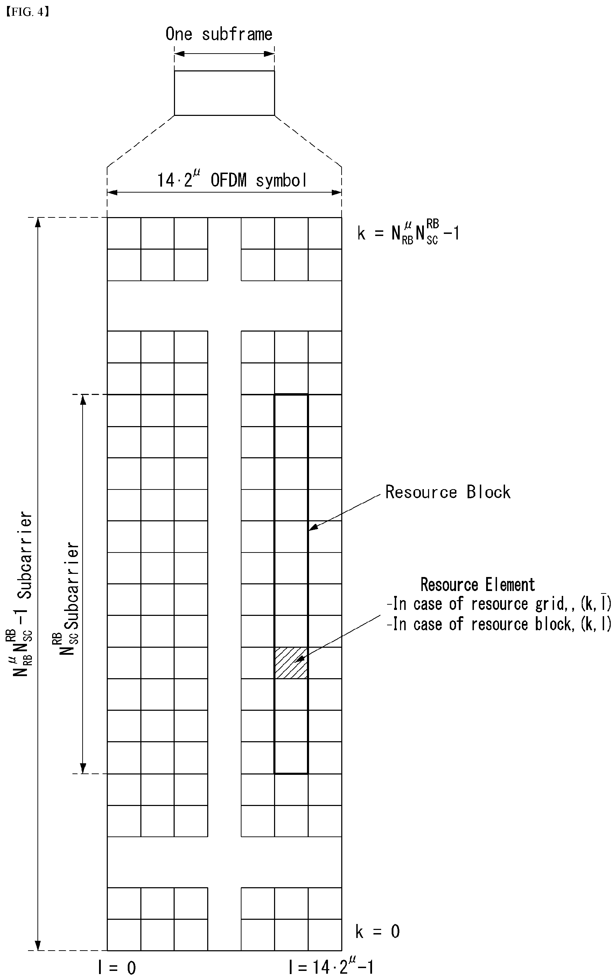

FIG. 4 illustrates an example of a resource grid supported in a wireless communication system to which a method proposed in the disclosure may be applied.

Referring to FIG. 4, a resource grid consists of $N_{\text{RB}}^{\mu} N_{\text{sc}}^{\text{RB}}$ subcarriers on a frequency domain, each subframe consisting of $14 \cdot 2\mu$ OFDM symbols, but the disclosure is not limited thereto.

In the NR system, a transmitted signal is described by one or more resource grids, consisting of $N_{\text{RB}}^{\mu} N_{\text{sc}}^{\text{RB}}$ subcarriers, and $2^{\mu} N_{\text{symb}}^{(\mu)}$ OFDM symbols, where $N_{\text{RB}}^{\mu} \leq N_{\text{RB}}^{\max, \mu}$. $N_{\text{RB}}^{\max, \mu}$ denotes a maximum transmission bandwidth and may change not only between numerologies but also between uplink and downlink.

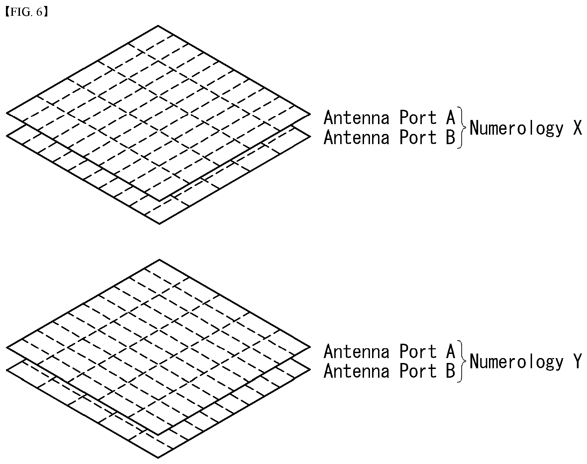

In this case, as illustrated in FIG. 6, one resource grid may be configured per numerology $\mu$ and antenna port p.

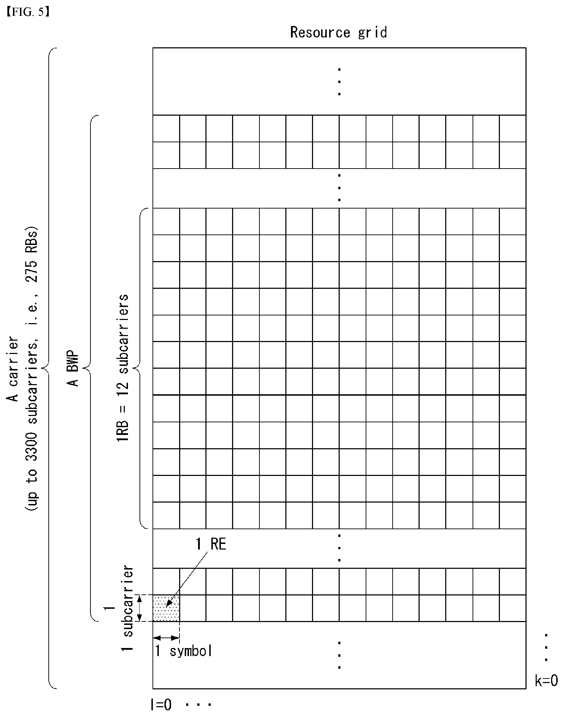

FIG. 5 illustrates a slot structure of an NR frame to which a method described in the present disclosure is applicable.

A slot includes a plurality of symbols in a time domain. For example, one slot includes 7 symbols in a normal CP, while one slot includes 6 symbols in an extended CP. A carrier includes a plurality of subcarriers in a frequency domain. A resource block (RB) is defined as a plurality of (e.g., 12) consecutive subcarriers in the frequency domain. A bandwidth part (BWP) is defined as a plurality of consecutive (P)RBs in the frequency domain and may correspond to one numerology (e.g., SCS, CP length, etc.). The carrier may include up to N (e.g., 5) BWPs. The data communication may be performed through an activated BWP, and only one BWP may be activated in one UE. In a resource grid, each element is referred to as a resource element (RE), and one complex symbol may be mapped to each RE.

FIG. 6 illustrates examples of a resource grid per antenna port and numerology to which a method proposed in the disclosure is applicable.

Each element of the resource grid for the numerology $\mu$ and the antenna port p is called a resource element and is uniquely identified by an index pair ($k$, $\bar{l}$), where $k = 0,..., N_{\text{RB}}^{\mu} N_{\text{sc}}^{\text{RB}} - 1$ is an index on a frequency domain, and

$$\bar{l} = 0,...2^{\mu} N_{\text{symb}}^{(\mu)} - 1$$ refers to a location of a symbol in a subframe. The index pair ($k,l$) is used to refer to a resource element in a slot, where $l = 0,...,N_{\text{symb}}^{\mu} - 1$.

The resource element ($k,\bar{l}$) for the numerology $\mu$ and the antenna port p corresponds to a complex value $a_{k,\bar{l}}^{(p,\mu)}$. When there is no risk for confusion or when a specific antenna port or numerology is not specified, the indexes p and $\mu$ may be dropped, and as a result, the complex value may be $a_{k,\bar{l}}^{(p)}$ or $a_{k,\bar{l}}$.

Further, a physical resource block is defined as $N_{\text{sc}}^{\text{RB}} = 12$ consecutive subcarriers in the frequency domain.

Point A serves as a common reference point of a resource block grid and may be obtained as follows.

offsetToPointA for PCell downlink represents a frequency offset between the point A and a lowest subcarrier of a lowest resource block that overlaps a SS/PBCH block used by the UE for initial cell selection, and is expressed in units of resource blocks assuming 15 kHz subcarrier spacing for FR1 and 60 kHz subcarrier spacing for FR2;

absoluteFrequencyPointA represents frequency-location of the point A expressed as in absolute radio-frequency channel number (ARFCN).

The common resource blocks are numbered from 0 and upwards in the frequency domain for subcarrier spacing configuration $\mu$.

The center of subcarrier 0 of common resource block 0 for the subcarrier spacing configuration $\mu$ coincides with 'point A'. A common resource block number $n_{\text{CRB}}^{\mu}$ in the frequency domain and resource elements (k, l) for the subcarrier spacing configuration $\mu$ may be given by the following Equation 1.

【Equation 1】

$$n_{\text{CRB}}^{\mu} = \left\lfloor \frac{k}{N_{\text{sc}}^{\text{RB}}} \right\rfloor$$

Here, $k$ may be defined relative to the point A so that $k = 0$ corresponds to a subcarrier centered around the point A. Physical resource blocks are defined within a bandwidth part (BWP) and are numbered from 0 to $N_{\text{BWP},i}^{\text{size}} - 1$, where $i$ is No. of the BWP. A relation between the physical resource block $n_{\text{PRB}}$ in BWP $i$ and the common resource block $n_{\text{CRB}}$ may be given by the following Equation 2.

【Equation 2】

$$n_{\text{CRB}} = n_{\text{PRB}} + N_{\text{BWP},i}^{\text{start}}$$

Here, $N_{\text{BWP},i}^{\text{start}}$ may be the common resource block where the BWP starts relative to the common resource block 0.

## Physical Channel and General Signal Transmission

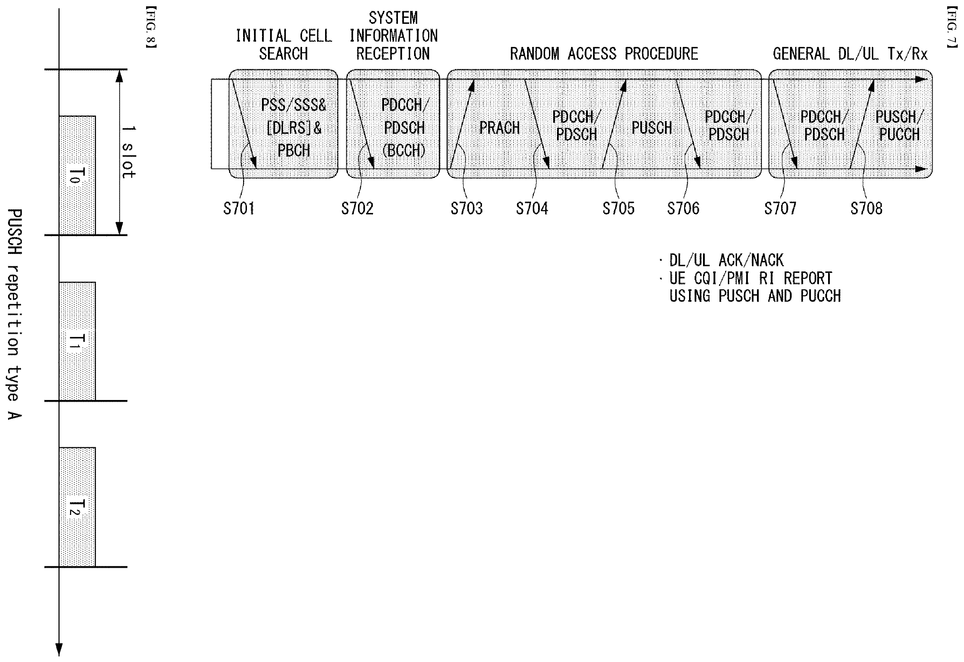

FIG. 7 illustrates physical channels and general signal transmission used in a 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S701). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. Meanwhile, the UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S702).

Meanwhile, when there is no radio resource first accessing the eNB or for signal transmission, the UE may perform a Random Access Procedure (RACH) to the eNB (S703 to S706). To this end, the UE may transmit a specific sequence to a preamble through a Physical Random Access Channel (PRACH) (S703 and S705) and receive a response message (Random Access Response (RAR) message) for the preamble through the PDCCH and a corresponding PDSCH. In the case of a contention based RACH, a Contention Resolution Procedure may be additionally performed (S706).

The UE that performs the above procedure may then perform PDCCH/PDSCH reception (S707) and Physical Uplink Shared Channel (PUSCH)/Physical Uplink Control Channel (PUCCH) transmission (S708) as a general uplink/-downlink signal transmission procedure. In particular, the UE may receive Downlink Control Information (DCI) through the PDCCH. Here, the DCI may include control information such as resource allocation information for the UE and formats may be differently applied according to a use purpose.

Meanwhile, the control information transmitted by the UE to the base station or received by the UE from the base station through the uplink may include a downlink/uplink ACK/NACK signal, a channel quality indicator (CQI), a precoding matrix index (PMI), a rank indicator (RI).), etc. The UE may transmit control information, such as CQI/PMI/RI described above, through PUSCH and/or PUCCH.

## PUCCH format of NR

NR supports a total of 5 PUCCH formats, which can be divided into short PUCCH and long PUCCH depending on duration. Table 6 shows 5 PUCCH formats.

Shot duration PUCCH

- Format 0: for UCI up to 2 bits, with multiplexing
- Format 2: for UCI of more than 2 bits, no multiplexing

Long duration PUCCH

- Format 1: for UCI of up to 2 bits, with multiplexing
- Format 3: for UCI of more than 2 bits, no multiplexing
- Format 4: for UCI of more than 2 bits, with multiplexing

[Table 6]

| Format | PUCCH duration in OFDM symbols | Number of bits | Usage | Etc. |
|---|---|---|---|---|
| 0 | 1-2 | $\leq 2$ | HARQ, SR | Sequence selection |
| 1 | 4-14 | $\leq 2$ | HARQ, SR | Sequence modulation (by BPSK or QPSK) |
| 2 | 1-2 | >2 | HARQ, CSI, SR | CP-OFDM |
| 3 | 4-14 | >2 | HARQ, CSI, SR | DFT-s-OFDM |

(continued)

| Format | PUCCH duration in OFDM symbols | Number of bits | Usage | Etc. |
|---|---|---|---|---|
| 4 | 4-14 | >2 | HARQ, CSI, SR | DFT-s-OFDM (with pre-DFT OCC) |

**PUCCH coverage enhancement (CE)**

Regarding PUCCH enhancements, the following methods may be considered to improve PUCCH coverage.

- DMRS-less PUCCH: Design details for DMRS-less PUCCH may be further studied (e.g. sequence based PUCCH transmission, vs. reusing Rel-15 scheme to transmit UCI without DMRS)
- Rel-16 PUSCH-repetition-Type-B like PUCCH repetition for minimum UCI <=11 bits
- (explicit or implicit) dynamic PUCCH repetition factor indication
- DMRS bundling over PUCCH repetitions: Includes research on transmitting a subset of PUCCH repetitions without DMRS, at least for UCI <=11 bits

DMRS bundling for PUCCH repetition may be considered together with DMRS bundling for PUSCH repetition.
The PUCCH repetitions scheme must describe the resources used by PUSCH to meet the throughput target and may be compared to Rel-15/16 PUCCH repetition.
Table 7 shows the PUCCH coverage enhancement techniques under consideration.

[Table 7]

| PUCCH coverage enhancement techniques under consideration |
|---|
| Sequence based DMRS-less PUCCH |
| PUSCH repetition Type-B like PUCCH repetition |
| (Explicit or implicit) Dynamic PUCCH repetition factor indication |
| Sequence based PF 0/1 with Pi/2 BPSK |
| Pre-DFT data-RS multiplexing for PF2 with Pi/2 BPSK |
| DMRS bundling for PUCCH |
| Compact UCI |
| Freq hopping enhancement for PUCCH |
| Short/mini-slot PUCCH repetition |
| Power control enhancement for PUCCH |
| Increase maximum # allowed repetitions for PUCCH |
| PUCCH Transmit diversity scheme |
| DMRS overhead reduction |
| UE Antenna configuration enhancement for FR2 |
| Higher DMRS density |
| A-CSI on PUCCH |
| Symbol-level PUCCH repetition |
| Relay (including sidelink relay) |
| Reflective arrays |
| Split UCI payload on short and long PUCCH on adjacent S and U slots |

**PUSCH repetition**

PUSCH repetition type A and type B were introduced in NR Rel-15/16, and transmission is performed as follows depending on the PUSCH repetition type.

- PUSCH repetition type A

FIG. 8 shows an example of PUSCH repetition type A. PUSCH repetition type A performs repetition with the same PUSCH transmission start symbol location and PUSCH transmission symbol length for each slot, as shown in FIG. 8, with slot based repetition. At this time, if there is an invalid symbol that cannot be used for PUSCH transmission among the symbol resources constituting a specific PUSCH repetition, the transmission of the corresponding PUSCH repetition is dropped and is not performed. That is, when a total of 4 PUSCH repetition transmissions of Rep0, Rep1, Rep2, and Rep3 are performed, if an invalid symbol is included in the symbol resources constituting Rep1, the transmission of Rep1 is dropped, and only the transmission of Rep0, Rep2, and Rep3 is performed. Therefore, the number of repetitions actually performed may be smaller than the number of configured repetitions.
In the case of PUSCH repetition Type A, the UE is configured for frequency hopping by upper layer parameters.
One of the following two frequency hopping modes may be configured.

i) intra-slot frequency hopping, which can be applied to single slot PUSCH transmission and multi-slot PUSCH transmission

ii) inter-slot frequency hopping that can be applied to multi-slot PUSCH transmission

-PUSCH repetition type B

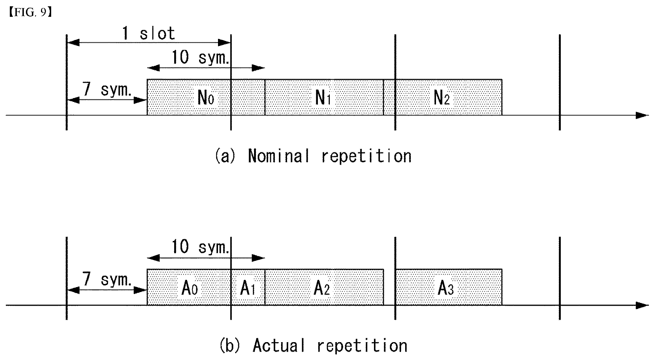

FIG. 9 shows an example of PUSCH repetition type B. In PUSCH repetition type B, repetition is performed in units of the symbol length through which the actual PUSCH is transmitted
That is, when the PUSCH is transmitted in 10 symbols as shown in FIG. 9 (a), PUSCH repetition is performed in units of 10 consecutive symbols. Repetition that determines PUSCH repetition transmission time resources without considering slot boundary, invalid symbol, etc. is called nominal repetition.
However, in the case of actual PUSCH repetition, one PUSCH cannot be transmitted at the slot boundary. When PUSCH transmission includes the slot boundary, two actual repetitions are performed around the slot boundary, as shown in FIG. 9 (b). Additionally, one PUSCH transmission may only be performed through consecutive symbols. If an invalid symbol exists in the time resource where PUSCH repetition should be transmitted, actual repetition is constructed using consecutive symbols with the invalid symbol as a boundary. For example, if symbols #0~#9 constitute one nominal repetition and symbols #3~#5 are invalid symbols, symbols #0~#2 and symbols #6~#9, excluding the invalid symbol, each constitute one actual repetition.
If a symbol that cannot be used for PUSCH transmission (e.g. DL symbol indicated by DCI format 2_0) is included in one actual repetition resource, the actual repetition transmission is dropped and is not performed.
For PUSCH repetition type B, the UE is configured for frequency hopping by upper layer parameters.
Frequency hopping mode for Type 2 configured PUSCH transmission follows the configuration of activating DCI format. One of two frequency hopping modes may be configured.

- inter-repetition frequency hopping
- inter-slot frequency hopping

**DMRS for PDSCH/PUSCH**

DMRS for PDSCH/PUSCH consists of front load DMRS and additional DMRS.

- Front load DMRS

The transmission time resource location of the front load DMRS is determined by the following factors.
The mapping type (PDSCH mapping type/PUSCH mapping type) of the data channel may vary depending on whether it is Type A or Type B (slot based or non-slot based), and the mapping type is configured through RRC.
In the case of slot based transmission, the transmission start OFDM symbol location of the front load DMRS may be the 3rd or 4th OFDM symbol of the data transmission resource, and an indication as to whether the transmission start OFDM symbol location is the 3rd OFDM symbol or the 4th OFDM symbol is transmitted through the PBCH.
Front load DMRS may be composed of one or two consecutive OFDM symbols, and whether the number of OFDM symbols is one or two is configured through RRC.
The mapping type within the transmission OFDM symbol resource of front load DMRS may have two types (Type 1 or Type 2), and information about the applicable type is configured as RRC. For Type 1, F-CDM (CDM in frequency domain), T-CDM (CDM in time domain), and/or FDM techniques are used to support 4 or 8 antenna ports, respectively, depending on whether the DMRS symbol length is 1 or 2. For Type 2, F-CDM, T-CDM, and/or FDM techniques are used to support 6 or 12 antenna ports, respectively, depending on whether the DMRS symbol length is 1 or 2.

- Additional DMRS

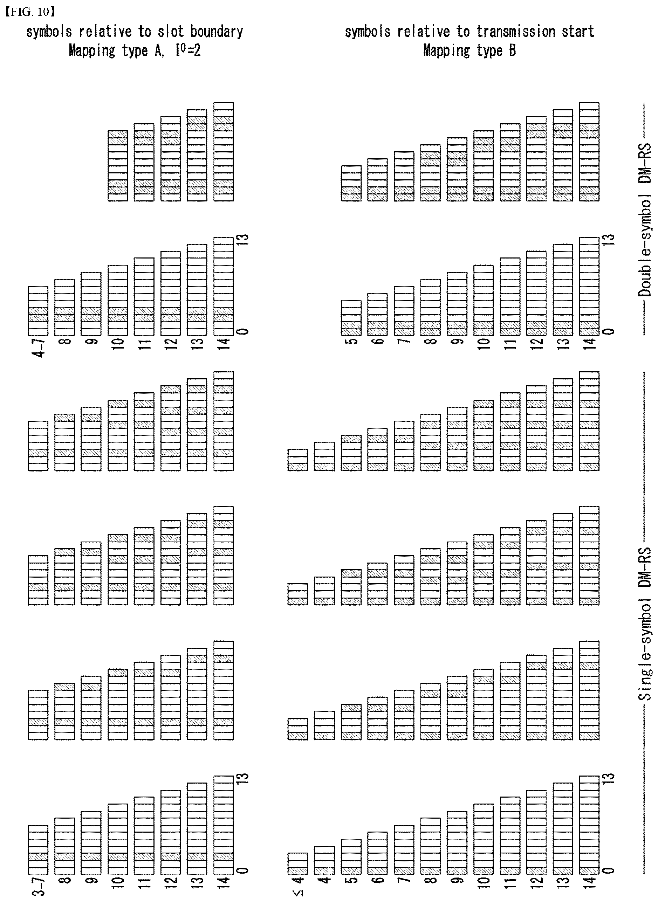

The number of Additional DMRS is determined as 0, 1, 2, or 3. The maximum number of additional DMRSs transmitted is determined through RRC, and within each maximum number of DMRSs, the number of additional DMRSs actually transmitted and the transmitted OFDM symbol location are determined according to the length of the OFDM symbol through which data is transmitted. The symbol locations of the front load DMRS and additional DMRS according to the data symbol length are as shown in FIG. 10.

The number of OFDM symbols and mapping type of each additional DMRS are determined to be the same as the number of OFDM symbols and mapping type of the front load DMRS.

FIG. 10 shows an example of DMRS location according to mapping type and number of OFDM symbols.

The location and number of symbols of the current PUSCH DMRS vary depending on the length of the symbol through which the PUSCH is transmitted. In particular, when using PUSCH repetition type B, the location and number of DMRS symbols are determined based on the actual repetition length of the PUSCH. In this case, the location of the DMRS may vary for each PUSCH repetition.

## Sequence generation

Sequence generation when transform precoding is disabled

If transform precoding for PUSCH is not enabled, the sequence $r(n)$ must be generated according to Equation 3.

【Equation 3】

$$r(n) = \frac{1}{\sqrt{2}}\left(1 - 2 \cdot c(2n)\right) + j\frac{1}{\sqrt{2}}\left(1 - 2 \cdot c(2n+1)\right)$$

Here, the pseudo-random sequence is defined in a predefined standard (e.g. 3GPP TS 38.211, clause 5.2.1). The pseudo-random sequence generator must be initialized as shown in Equation 4.

【Equation 4】

$$c_{\mathrm{init}} = \left(2^{17}\left(N_{\mathrm{symb}}^{\mathrm{slot}}n_{\mathrm{s,f}}^{\mu} + l + 1\right)\left(2N_{\mathrm{ID}}^{\bar{n}_{\mathrm{SCID}}^{\bar{\lambda}}} + 1\right) + 2^{17}\left\lfloor\frac{\bar{\lambda}}{2}\right\rfloor + 2N_{\mathrm{ID}}^{\bar{n}_{\mathrm{SCID}}^{\bar{\lambda}}} + \bar{n}_{\mathrm{SCID}}^{\bar{\lambda}}\right) \mathrm{mod}\, 2^{31}$$

Here, 1 is the OFDM symbol number within the slot, and $n_{\mathrm{s,f}}^{\mu}$ is the slot number within the frame.

- $N_{\mathrm{ID}}^{0}, N_{\mathrm{ID}}^{1} \in \{0, 1, \dots, 65535\}$ is given by the higher-layer parameters scramblingID0 and scramblingID1, respectively, in DMRS-UplinkConfig IE, if provided. And, the PUSCH is scheduled by PUSCH transmission with a configured grant or by DCI format 0_1 or 0_2;

- $N_{\mathrm{ID}}^{0} \in \{0, 1, \dots, 65535\}$ is given by the higher-layer parameter scramblingID0 in DMRS-UplinkConfig IE, if provided. The PUSCH is scheduled by DCI format 0_0 with CRC scrambled by C-RNTI, MCS-C-RNTI, or CS-RNTI.

- $N_{\mathrm{ID}}^{0}, N_{\mathrm{ID}}^{1} \in \{0, 1, \dots, 65535\}$ is given by higher-layer parameters msgA-scramblingID0 and msgA-scramblingID1, respectively, in the msgA-DMRS-Configuration IE for each msgA PUSCH configuration, if provided. And, the PUSCH transmission is triggered by Type-2 random access procedure, as described in predefined standards (e.g. 3GPP TS 38213, clause 8.1A);

-

$$N_{\mathrm{ID}}^{\bar{n}_{\mathrm{SCID}}^{\bar{\lambda}}} = N_{\mathrm{ID}}^{\mathrm{cell}}$$

,

otherwise;

- $\bar{n}_{\mathrm{SCID}}^{\bar{\lambda}}$ and $\bar{\lambda}$ are given as Equations 5 to 6.
- When the upper layer parameter dmrs-Uplink-r16 is provided to DMRS-UplinkConfig IE, it is given as Equation 5.

【Equation 5】

$$\bar{n}_{\mathrm{SCID}}^{\bar{\lambda}} = \begin{cases} n_{\mathrm{SCID}} & \lambda = 0 \text{ or } \lambda = 2 \\ 1 - n_{\mathrm{SCID}} & \lambda = 1 \end{cases}$$
$$\bar{\lambda} = \lambda$$

Here, $\lambda$ is a CDM group defined in a predefined standard (e.g. 3GPP TS 38.211, clause 6.4.1.1.3).

- Otherwise, it is given as Equation 6.

【Equation 6】

$$\bar{n}_{\mathrm{SCID}}^{\bar{\lambda}} = n_{\mathrm{SCID}}$$
$$\bar{\lambda} = 0$$

quantity $n_{\mathrm{SCID}} \in \{0,1\}$ is indicated by the following.
- DM-RS initialization field, if present, in the DCI associated with PUSCH transmission if DCI format 0_1 or 0_2 is used;
- For PUSCH transmission of Type-2 random access process or Type 1 PUSCH transmission with configured grant, if present, upper layer parameter dmrs-SeqInitialization;
- Otherwise, $n_{\mathrm{SCID}} = 0$.

Sequence generation when 6.4.1.1.1.2 transform precoding is enabled
When transform precoding for PUSCH is enabled, reference-signal sequence $r(n)$ must be generated according to Equation 7.

【Equation 7】

$$r(n) = r_{u,v}^{(\alpha,\delta)}(n)$$
$$n = 0,1,\ldots,M_{\mathrm{sc}}^{\mathrm{PUSCH}}/2^{\delta} - 1$$

Here, $r_{u,v}^{(\alpha,\delta)}(n)$ with $\delta=1$ and $\alpha=0$ depends on the configuration.

- The upper layer parameter dmrsUplinkTransformPrecoding-r16 is configured, and $\pi/2$-BPSK modulation is used for PUSCH. If the PUSCH transmission is not an msg3 transmission, and the transmission is not scheduled using DCI format 0_0 in the common search space, $r_{u,v}^{(\alpha,\delta)}(n)$ has $c_{\mathrm{init}}$ given in Equation 8.

【Equation 8】

$$c_{\mathrm{init}} = \left(2^{17}\left(N_{\mathrm{symb}}^{\mathrm{slot}} n_{\mathrm{s,f}}^{\mu} + l + 1\right)\left(2N_{\mathrm{ID}}^{n_{\mathrm{SCID}}} + 1\right) + 2N_{\mathrm{ID}}^{n_{\mathrm{SCID}}} + n_{\mathrm{SCID}}\right) \mathrm{mod}\, 2^{31}$$

Here, if given by the upper layer parameter antennaPort for PUSCH transmission scheduled by type-1 configured grant or not given by DCI for transmission scheduled by DCI format 0_1, $n_{\mathrm{SCID}} = 0$, and, $N_{\mathrm{ID}}^0, N_{\mathrm{ID}}^1 \in \{0,1,\ldots,65535\}$ is given by higher-layer parameters pi2BPSKscramblingID0 and pi2BPSKscramblingID1, respectively, in DMRS-UplinkConfig IE, if provided. And the PUSCH is scheduled by PUSCH transmission with a configured grant or by DCI format 0_1. $N_{\mathrm{ID}}^0 \in \{0,1,\ldots,65535\}$, if provided, is given by the upper layer parameter pi2BPSKscramblingID0 in DMRS-UplinkConfig IE. And it is scheduled by DCI format 0_0 with CRC scrambled by PUSCHSMS C-RNTI, MCS-C-RNTI, or CS-RNTI;

Otherwise, $N_{ID}^{n_{SCID}} = N_{ID}^{cell}$;

Otherwise, $r_{u,v}^{(\alpha,\delta)}(n)$ is given by a predefined standard (e.g. 3GPP TS 38.211, clause 5.2.2).

Sequence group $u = \left(f_{gh} + n_{ID}^{RS}\right) \bmod 30$. Here $n_{ID}^{RS}$ is given as follows. $n_{ID}^{PUSCH}$ is configured by the upper layer parameter nPUSCH-Identity in DMRS-UplinkConfig IE, the upper layer parameter dmrsUplinkTransform-Precoding-r16 is not configured, and if PUSCH is not scheduled by RAR UL grant and is not scheduled by DCI format 0_0 with CRC scheduled by TC-RNTI, $n_{ID}^{RS} = n_{ID}^{PUSCH}$;

If the upper layer parameter mrs-UplinkTransformPrecoding-r16 is configured, $\pi/2$-BPSK modulation is used for PUSCH, the PUSCH transmission is not an msg3 transmission, and the transmission is not scheduled using DCI format 0_0 in the common search space. $n_{ID}^{RS} = N_{ID}^{n_{SCID}}$;

Otherwise, $n_{ID}^{RS} = N_{ID}^{cell}$

Here, $f_{gh}$ and sequence number $v$ are given as follows.

If group and sequence hopping are not enabled, Equation 9 is given.

【Equation 9】

$$f_{gh} = 0$$
$$v = 0$$

When group hopping is enabled and sequence hopping is disabled, Equation 10 is given

【Equation 10】

$$f_{gh} = \left(\sum_{m=0}^{7} 2^m c\left(8\left(N_{symb}^{slot} n_{s,f}^{\mu} + l\right) + m\right)\right) \bmod 30$$
$$v = 0$$

Here, the pseudo-random sequence $c(i)$ is defined by a predefined standard (e.g. 3GPP TS 38.211, clause 5.2.1) and is initialized with $c_{init} = \left\lfloor n_{ID}^{RS}/30 \right\rfloor$ at the start of each radio frame.

When sequence hopping is enabled and group hopping is disabled, Equation 11 is given.

【Equation 11】

$$f_{gh} = 0$$
$$v = \begin{cases} c\left(N_{symb}^{slot} n_{s,f}^{\mu} + l\right) & \text{if } M_{ZC} \geq 6 N_{sc}^{RB} \\ 0 & \text{otherwise} \end{cases}$$

Here, the pseudo-random sequence $c(i)$ must be defined by a predefined standard (e.g. 3GPP TS 38.211, clause 5.2.1) and must be initialized to $c_{init} = n_{ID}^{RS}$ at the beginning of each radio frame.

Hopping mode is controlled by upper layer parameters:
For PUSCH transmission scheduled by RAR UL grant or DCI format 0_0 with CRC scrambled by TC-RNTI, sequence hopping is disabled, and group hopping is enabled or disabled by the upper layer parameter groupHoppingEnabled-TransformPrecoding.

For all other transmissions, sequence hopping and group hopping are enabled or disabled, if provided, by the respective upper layer parameters sequenceHopping and sequenceGroupHopping. Otherwise, the same hopping mode as Msg3 should be used.

The UE is not expected to handle cases of combined sequence hopping and group hopping. The above quantity 1 is the OFDM symbol number except for the case of double-symbol DMRS, in which 1 is the OFDM symbol number of the first symbol of the double-symbol DMRS.

- For PUSCH transmission scheduled by DCI format 0_0 with RAR UL acknowledgment or CRC scrambled by TC-RNTI sequence hopping is disabled and group hopping is enabled or disabled by the upper layer parameter groupHoppingEnabledTransformPrecoding.

- For all other transmissions, sequence hopping and group hopping are enabled or disabled by the respective upper layer parameters sequenceHopping and sequenceGroupHopping, otherwise the same hopping mode as Msg3 is used.

The UE is expected not to handle cases of combined sequence hopping and group hopping.

The above quantity 1 is the OFDM symbol number except in the case of double-symbol DMRS, and in this case, 1 is the OFDM symbol number of the first symbol of the double-symbol DMRS.

For the purpose of coverage enhancement, NR supports repetitive transmission through repetition of PUSCH or PUCCH. In the case of the existing PUSCH repetition type A, if all symbols corresponding to SLIV are not available for PUSCH transmission, the entire PUSCH transmission of the corresponding slot is dropped, and this is the same for PUCCH.

However, in order to improve the channel estimation performance of the base station (e.g. gNB), although transmission of PUSCH or PUCCH is not possible, additional transmission of DMRS without data may be considered to some available symbols, and this is being discussed in RAN1. In addition, DMRS optimization is being discussed for the purpose of coverage enhancement, and equally spaced DMRS and interference randomization may be considered.

In the present disclosure, although transmission of PUSCH or PUCCH is not possible, a mapping method of DMRS to some available symbols and an improvement plan for DMRS optimization are described.

Specifically, the present disclosure proposes a method for mapping DMRS when PUSCH/PUCCH is dropped (hereinafter, first embodiment), a method for mapping DMRS to PUSCH/PUCCH dropped slot (hereinafter, second embodiment), a method for mapping DMRS at equal intervals (hereinafter, third embodiment), a method for mapping DMRS to orphan symbol (hereinafter, fourth embodiment), a method for hopping a scrambling ID (hereinafter, fifth embodiment), and a method for encoding DMRS for time domain window (hereinafter, sixth embodiment).

Hereinafter, the embodiments described in the present disclosure are only divided for convenience of explanation, and it goes without saying that some methods and/or some configurations of one embodiment may be substituted with methods and/or configurations of other embodiments, or may be applied in combination with each other.

The present disclosure is described from the perspective of PUSCH transmission, but the content of the present disclosure includes application to transmission of other channels such as PUCCH, PDSCH, and PDCCH as well as PUSCH.

Additional advantages, objects and features of the invention will be set forth in part in the following description, and in part will be apparent to those skilled in the art upon review of the following, or may be learned from embodiments of the present disclosure. The objects and other advantages of the present disclosure may be realized and achieved by the structure particularly pointed out in the description and claims set forth in the present disclosure as well as in the accompanying drawings.

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B"

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

Additionally, parentheses used in the present disclosure may mean "for example." Specifically, when "control information (PDCCH)" is indicated, "PDCCH" may be proposed as an example of "control information." In other words, "control information" in the present disclosure is not limited to "PDCCH," and "PDDCH" may be proposed as an example of "control information." Additionally, even when "control information (i.e. PDCCH)" is indicated, "PDCCH" may be proposed as an example of "control information."

Technical features described individually in one drawing in the present disclosure may be implemented individually or simultaneously.

The following drawings are prepared to explain a specific example of the present disclosure. Since the names of specific devices or specific signals/messages/fields described in the drawings are provided as examples, the technical features of the present disclosure are not limited to the specific names used in the drawings below.

The effects that can be achieved through specific examples of the present disclosure are not limited to the listed effects. For example, there may be various technical effects that a person having ordinary skill in the related art can understand or derive from the present disclosure. Accordingly, the specific effects of the present disclosure are not limited to those explicitly described in the present disclosure, and may include various effects that can be understood or derived from the technical features of the present disclosure.

First example

The present example, which is not part of the invention, looks at a method of mapping DMRS when PUSCH/-PUCCH is dropped.

Hereinafter, in the present disclosure, the description focuses on physical uplink shared channel (PUSCH) repetition, but the same may be applied to physical uplink control channel (PUCCH) repetition.

In the case of existing PUSCH repetition type A, when all symbols corresponding to start and length indicator value (SLIV) are not available for PUSCH transmission, the entire PUSCH transmission of the corresponding slot may be dropped. This is the same for PUCCH

A slot that contains all downlink, flexible, and uplink symbols in one slot can be called a special slot. In these special slots, PUSCH transmission is often dropped. However, in order to improve the channel estimation performance of the base station (e.g. gNB), additional transmission of a demodulation reference signal (DMRS) without data in the corresponding special slot may be considered.

As a method of transmitting this, two methods may be considered in terms of configuration. Method 1-1 is a method of transmitting a PUSCH with only a DMRS, and method 1-2 is a method of transmitting a DMRS rather than a PUSCH. This is different in terms of configuration of DMRS.

The methods described below are separated for convenience of explanation, and it goes without saying that the configuration of one method can be replaced with the configuration of another method or applied in combination with each other.

**(Method 1-1)** - Transmission of PUSCH with only DMRS

Considering PUSCH type A in terms of transmitting DMRS to a special slot, a PUSCH consisting only of DMRS must be defined. That is, a DMRS that does not map a transport block (TB) may be defined. In addition, it may be considered to transmit PUSCH without mapping TB rather than dropping PUSCH transmission in a slot to which PUSCH was not mapped because some symbols in SLIV are invalid unlike existing operations. At this time, in the case of PUSCH to which TB is not mapped, it may be considered to map a DMRS according to the existing DMRS mapping rule, or to map a specific number of consecutive DMRSs. Detailed DMRS mapping method may refer to the above-described sequence generation contents and the second embodiment.

**(Method 1-2)** - Transmission of DMRS rather than PUSCH

In the case of transmission of DMRS rather than PUSCH, PUSCH is mapped only when all symbols of SLIV are available according to the existing PUSCH mapping rule, and if PUSCH transmission is dropped due to a specific symbol among SLIV being unavailable, DMRS transmission may be considered. In this case, the PUSCH is transmitted using the existing method, and only DMRS is transmitted in a special slot, etc., and the UE may not provide additional indications by transmitting this DMRS by post-indication or pre-arranged method about the slot location, number of symbols, etc. of these transmissions.

Same as for method 1-1 and method 1-2, the decision may be made depending on the number of symbols available to the UE considering the contents of the above-described sequence generation and the second embodiment in the slot (e.g. special slot) where the PUSCH is dropped.

Second example

The present example, which is not part of the invention, looks at a method for mapping DMRS to the PUSCH/PUCCH dropped slot.

There may be two main methods (i.e. Method 2-1 and Method 2-2) of sequence generation of the DMRS that maps to the PUSCH/PUCCH dropped slot of the proposed method of the second embodiment.

The methods described below are divided for convenience of explanation, and it goes without saying that the configuration of one method can be replaced with the configuration of another method or applied in combination with each other.

**(Method 2-1)** The DMRS sequence may be generated according to the existing DMRS sequence generation rule. That is, the DMRS sequence may be generated using the index of the symbol within the slot to which the DMRS is to be mapped, the slot index within the subframe, the cell ID, etc. In other words, the DMRS sequence may be generated according to the contents of 'sequence generation' described above.

(Method 2-2) The sequence of the adjacent non-dropped PUSCH/PUCCH (or DMRS sequence of the PUSCH/PUCCH) may be copied and transmitted to the slot where transmission is dropped. For a PUSCH/PUCCH dropped slot, the UE needs to decide on a set of symbols for transmitting PUSCH/PUCCH or DMRS, in which only DMRS exists in the corresponding slot. This can largely consider a set of consecutive symbols, or a set of discontinuous symbols within one slot. In detail, the following may be considered.

That is, when N consecutive symbols are available, the UE may transmit DMRS on the corresponding symbol when N consecutive symbols are available in a slot that cannot transmit PUSCH according to SLIV

And/or, the case where N symbols unrelated to continuity are available can be considered. When N symbols are available regardless of continuity in a slot that cannot transmit PUSCH according to SLIV, the UE may transmit DMRS on the corresponding symbol.

In all cases, the symbol number N may be configured as radio resource control (RRC)/ medium access control-control element (MAC-CE)/ downlink control information (DCI). A method for mapping DMRS to such symbols may considered the followings.

When the DMRS sequence is not copied and used, that is, when the DMRS sequence is generated according to the existing method, the DMRS symbol may be located depending on the DMRS mapping method of repeated PUSCH/PUCCH. Alternatively, the DMRS symbol may be mapped and transmitted to all N available symbols. Alternatively, considering the downlink flexible uplink (DFU) structure, DMRS symbols may be mapped and transmitted only to the last M symbols in SLIV.

When copying the DMRS sequence of the undropped PUSCH/PUCCH and mapping it to the symbol set in which the transmission of the PUSCH/PUCCH containing data is dropped, the following options may be considered depending on the number of copied DMRS symbols, X, and the number of available symbols, Y. If X=Y, the DMRS of the copied PUSCH/PUCCH may be located corresponding to the ascending order of the symbol index. Alternatively, if X>Y, that is, if the number of available symbols is small, DMRS symbols to be copied are mapped in ascending or descending order of symbol index within the slot, and there may be some DMRS symbols that are not mapped. Alternatively, if X<Y, it may be considered to map and transmit only the symbols behind in time considering that the slot is in the order of downlink-flexible-uplink when the slot is a special slot.

In a method of mapping by copying the sequence of the DMRS of an undropped PUSCH/PUCCH, when copying the DMRS of another PUSCH/PUCCH, copying the DMRS of the nearest adjacent PUSCH/PUCCH may be considered. That is, copying the DMRS of the repeated PUSCH/PUCCH corresponding to the slot index closest to the slot index transmitting only DMRS may be considered.

In the case of PUSCH repetition type B, this may be considered by replacing it with a unit according to actual transmission. If there is transmission of PUSCH/PUCCH in both the previous and subsequent slot indices, it may be considered to copy the DMRS of the nearest PUSCH/PUCCH depending on the distance due to the set of symbols and the number of symbols that transmit only DMRS

Third example

The present example, which is not part of the invention, looks at a method of mapping DMRS at equal intervals.

An equally spaced DMRS on the time axis may be considered to improve channel estimation performance of base station (e.g. gNB). Here, equally spaced DMRS may mean that the spacing between DMRSs is set to be the same or similar depending on the SLIV length, rather than the symbol location within the fixed slot of the existing DMRS. Alternatively, in the case of PUSCH repetition type B, the location of the DMRS symbol may be determined at equal intervals on the time axis for consecutive symbols where the PUSCH is transmitted without considering the actual repetition boundary and nominal repetition boundary. Sequence generation of these equally spaced DMRS follows the existing DMRS sequence generation rule.

In order to be compatible with the existing DMRS configuration, configuration of equally spaced DMRS may be considered by indicating RRC/MAC-CE/DCI, etc. For example, for equally spaced DMRS, an equally spaced DMRS mode can be generated in addition to the existing DMRS and enabled by indicating to the UE through DCI, etc. This DCI may consider 2 bits for enable/disable. In such cases, it may be considered to configure the time DMRS density or the interval between DMRS symbols in advance as RRC/MAC-CE, etc. Alternatively, considering the DCI of W bits, it may be considered to configure the interval of the DMRS symbol according to the granularity of $2^W$.

Fourth example

The present example, which is not part of the invention, looks at a method of mapping DMRS to an orphan symbol.

In the case of PUSCH repetition type B, an orphan symbol consisting of one symbol may occur, and according to the current predefined standard (e.g. 3GPP specification), no transmission is performed on this orphan symbol. However, for the purpose of improving channel estimation performance, transmission of DMRS to these orphan symbols may be considered.

The simplest method may be to generate a DMRS sequence according to the existing DMRS generation rules, map it to an orphan symbol, and transmit it. In addition to this, the case of copying the DMRS of an adjacent PUSCH/PUCCH may be considered as mentioned in the above-described content of sequence generation and the second embodiment.

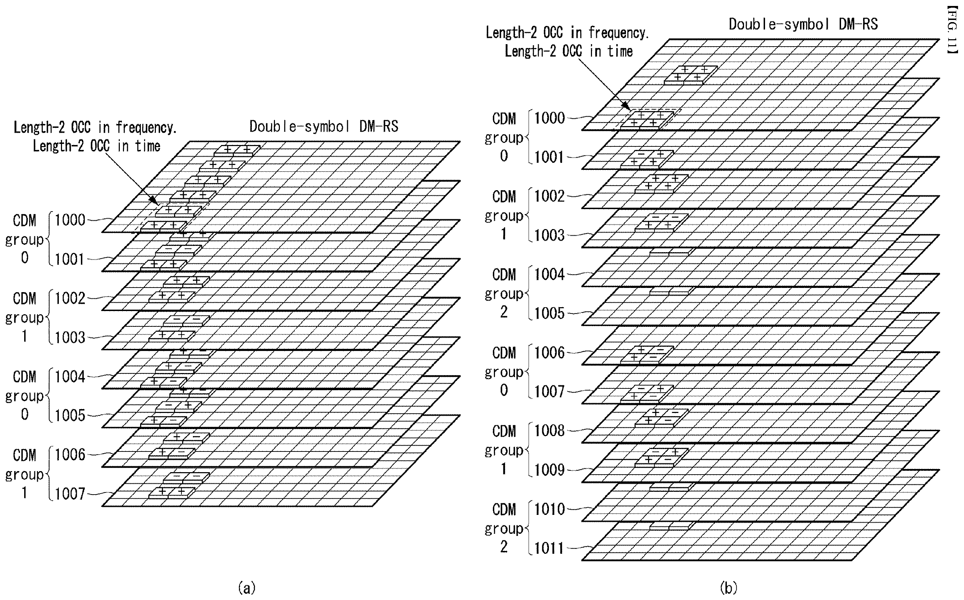

FIG. 11 shows an example of mapping of double symbol DMRS. FIG. 11 (a) shows an example of DMRS type 1, and FIG. 11 (b) shows an example of DMRS type 2.

In such a case, if the PUSCH/PUCCH from which the DMRS is to be copied uses a double symbol DMRS as shown in FIGS. 11 (a) and 11 (b), copying the DMRS of a PUSCH adjacent to an orphan symbol consisting of a single symbol results in a shortage of symbols. When mapping this, the following cases may be considered. When mapping DMRS, while maintaining DMRS RE mapping within one symbol, it may be considered to map in a form that removes (disabled) only the TD (time domain)-OCC (orthogonal cover code) that is connected to the indicated DMRS port (across 2-symbols).

Fifth example

The present example, which is not part of the invention, looks at a method of hopping a scrambling ID.

In the existing PUSCH/PUCCH repetition, DMRS for repeated PUSCH/PUCCH transmission is generated according to DMRS-UplinkConfig. DMRS-UplinkConfig is shown in Table 8.

【Table 8】

```
                –    DMRS-UplinkConfig

The IE DMRS-UplinkConfig is used to configure uplink demodulation reference signals for PUSCH.
                          DMRS-UplinkConfig information element

-- ASN1START
-- TAG-DMRS-UPLINKCONFIG-START

DMRS-UplinkConfig ::=             SEQUENCE {
     dmrs-Type                         ENUMERATED {type2}
OPTIONAL,     -- Need S
     dmrs-AdditionalPosition          ENUMERATED {pos0, pos1, pos3}
OPTIONAL,     -- Need S
     phaseTrackingRS                   SetupRelease { PTRS-UplinkConfig }
OPTIONAL,     -- Need M
     maxLength                         ENUMERATED {len2}
OPTIONAL,     -- Need S
     transformPrecodingDisabled   SEQUENCE {
          scramblingID0                    INTEGER (0..65535)
OPTIONAL,     -- Need S
          scramblingID1                    INTEGER (0..65535)
OPTIONAL,     -- Need S
          ...
     }
OPTIONAL,     -- Need R
     transformPrecodingEnabled    SEQUENCE {
          nPUSCH-Identity                  INTEGER(0..1007)
OPTIONAL,     -- Need S
          sequenceGroupHopping             ENUMERATED {disabled}
OPTIONAL,     -- Need S
          sequenceHopping                  ENUMERATED {enabled}
OPTIONAL,     -- Need S
          ...
     }
OPTIONAL,     -- Need R
     ...
}

-- TAG-DMRS-UPLINKCONFIG-STOP
-- ASN1STOP
```

This applies equally to PUSCH/PUCCH transmitted in repetition. In other words, the CDM group configured for the purpose of servicing multi-users is maintained, and the same scramblingID is also used. ScramblingID is a higher-layer parameter and is not a value that changes instantaneously. DMRS generation of PUSCH/PUCCH refer to the contents of sequence generation described above. However, in cases where there are many users in the cell, by chance, due to limitations in code resources, scrambling IDs overlap, or due to the channel environment, orthogonality may not be guaranteed. If such a UE repeats repetition for coverage enhancement, it may continue to use a DMRS sequence with poor performance.

Therefore, to overcome this problem, hopping of the scrambling ID may be considered. In other words, different values may be artificially given during the sequence generation step for the purpose of maximizing the interference randomization effect. The hopping of this scrambling ID may be considered to be indicated by RRC/MAC-CE/DCI, etc. For example, it is possible to consider receiving hopping pattern information of scrambling ID for each UE or cell common through RRC/MAC-CE, etc., and indicating scrambling ID hopping with a new DCI, or being indicated together with repetition configuration.

Alternatively, it may be considered to be configured implicitly/explicitly at the same time as configuration of the TBoMS. As a hopping pattern for this scrambling ID, it may be considered to hop the scrambling ID according to a pre-arranged method based on the index of the time axis, such as the slot index within the subframe and the symbol index within the slot.

### Sixth Embodiment

The present embodiment looks at a method of encoding DMRS for a time domain window.

It is agreed upon to specify a time-domain window for joint channel estimation in coverage enhancement. Here, the time-domain window for joint channel estimation refers to the time period in which transmission power, phase, etc. are maintained for the purpose of joint channel estimation/DMRS bundling from the perspective of the receiving end of the base station (e.g. gNB).

Hereinafter, in the present disclosure, 'time-domain window' may be referred to as 'time window'. This time window may be a value reported by the UE, or may be a value that a base station (e.g., gNB) explicitly or implicitly configure to the UE. Within this time window, the base station (e.g. gNB) may expect that the UE will not change transmission characteristics such as power and phase, and that timing advance adjustments will not be made. However, due to certain reasons, the UE may need to change transmission characteristics within the time window. The following reasons (i.e. Case 1 to Case 3) may be considered as those reasons.

Case 1) The UE may need to change the transmission power within the time window. For example, if the received TPC (transmission power control) command is outside a certain range based on prior agreement or the UE's judgment, the UE may require a change in transmission power.

Case 2) The UE may need to change the transmission timing. For example, the UE may not receive a TA (timing advance) command within the time window due to prior agreement, etc., but the timing of application of the TA command received before the time window may be within the time window. Alternatively, if the TA command is received with the expectation that it will not be applied within the time window, but the current transmission timing and the indicated transmission timing deviate by more than a certain range, the UE may consider performing TA adjustment.

Case 3) The UE may receive indications from the base station (e.g. gNB) to change the transmission codebook within the time window, and perform this with priority over the time window.

Due to the above-mentioned cases or other cases, the UE may change the transmission characteristics within the time window indicated by the base station (e.g. gNB) or reported by the UE. This may be done at the UE's discretion, or when the channel or transmission/reception environment changes beyond a certain range due to prior agreements, etc. In this case, if the UE does not notify the base station (e.g. gNB) that the transmission characteristics have changed in the middle of the time window, this may significantly degrade the joint channel estimation performance of the base station (e.g. gNB). To solve this, the UE informs the base station (e.g. gNB) of changes in transmission characteristics in the middle of the time window. The following methods may be considered to inform this.

The methods described below are divided for convenience of explanation, and it goes without saying that the configuration of one method may be replaced with the configuration of another method or applied in combination with each other.

### (Method 6-1) - Method of indicating within time window

When the UE transmits by changing the transmission characteristics (power, phase, timing, etc.) in the i-th slot within the time window, the UE reports the DMRS of the i-th slot to the base station (e.g. gNB) through differential encoding with the DMRS of the i-1-th slot. That is, the UE reports the DMRS of the i-th slot to the base station by performing differential encoding with the DMRS of the i-1-th slot.

Here, differential encoding of DMRS means setting a phase difference of a certain interval (for example, $\pi$) between the DMRS of the i-1-th slot and the i-th-slot.

When transmitting by changing the transmission characteristics in the i-th slot within the time window, the UE may perform differential encoding by setting a phase difference between the DMRS of the i-th slot and the i+1-th slot.

Through this differential encoding of DMRS, the UE informs the point in time (i.e. sudden end point within the time window) when the transmission characteristics have been changed within the time window expected by the base station (e.g. gNB). Alternatively, the UE may always inform the base station (e.g. gNB) of the start and end of the time window through differential encoding.

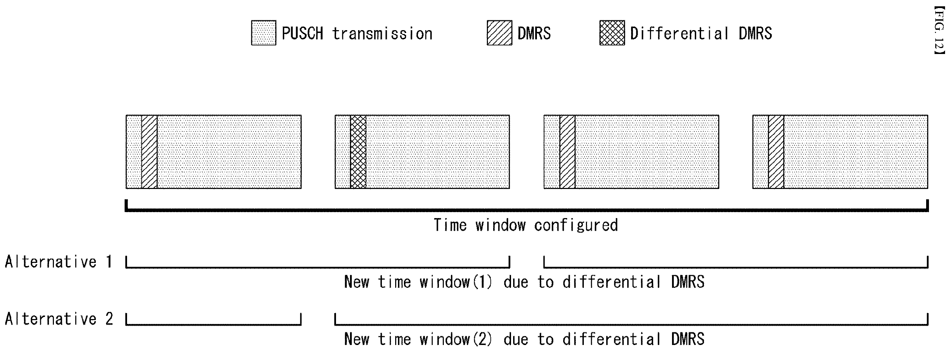

FIG. 12 is a diagram for explaining Method 6-1.

Referring to FIG. 12, the base station may configure/define four slots in the UE as one time window. And/or, the UE may change the transmission characteristics by Case 1 to Case 3 above within the corresponding time window. For example, the UE may change transmission characteristics in the second slot (1201). Accordingly, the UE may differentially encode and transmit the DMRS of the second slot. The base station may receive the differential encoded DMRS, like Alternative 1, distinguish/determine from the first slot to the second slot as one time window, and from the third slot to the fourth slot as another time window. Alternatively, the base station may receive the differential encoded DMRS, as in Alternative 2, distinguish/determine the first slot as one time window, and from the second to fourth slots as another time window. That is, the UE may report changes in transmission characteristics to the base station within one time window configured based on differential encoding, and the base station may know that one time window is divided into two or more based on differential encoding.

And/or, in the example of FIG. 12, the DMRS may be differentially encoded in the second slot, and the DMRS may have the same phase as the differentially encoded DMRS of the second slot in subsequent slots. Alternatively, the DMRS may be differentially encoded only in the second slot, and the DMRS may have the original phase (i.e. the same phase as the first DMRS) in subsequent slots.

**(Method 6-2)** - Method of indicating after the time window ends

The UE may transmit by changing the transmission characteristics (power, phase, timing, etc.) within a time window, and then report to the base station (e.g. gNB) the slot whose transmission characteristics have been changed within a specific time (e.g. within N slots) after transmission of the uplink. In other words, when the UE transmits by changing the transmission characteristics in the i-th slot within the time domain window, it may indicate to the base station (e.g. gNB) that it changed the transmission characteristics and transmitted in the i -th slot within the i+N-th slot

**(Method 6-3)** - Method of distinguishing time windows

By the above-described method, the UE indicates to the base station (e.g. gNB) the point in time when the transmission characteristics within the time domain window have changed. If the base station (e.g. gNB) expects that the time domain window after the i-th slot indicated in this way will continue, this indication may be interpreted in two ways.

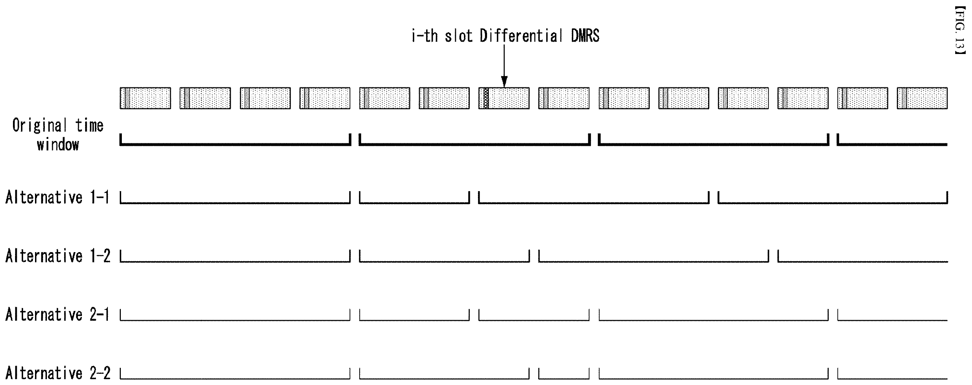

FIG. 13 is a diagram for explaining Method 6-3. FIG. 13 assumes an example in which the length/boundary of the time window is configured as 4 slots.

Hereinafter, in the present disclosure, Method 6-3 (i.e. Method 6-3-1/Method 6-3-2) will be described with reference to FIG 13

**(Method 6-3-1)** When the UE performs differential encoding of the DMRS of the i-th slot/TO (time occasion), as shown in Alternative 1-1 of FIG. 13, the time-domain window including the i-1-th slot/TO is terminated, and a new time-domain window is started from the subsequent i-th slot/TO. Alternatively, when the UE performs differential encoding of the DMRS of the i-th slot/TO (time occasion), as shown in Alternative 1-2 of FIG. 13, the time-domain window including the i-th slot/TO may be terminated, and a new time-domain window may be started from the subsequent i+1-th slot/TO.

In other words, performing differential encoding may mean changing the boundaries of the time domain window.

**(Method 6-3-2)** When the UE performs differential encoding of the DMRS of the i-th slot/TO, it may mean splitting of the time window including the i-th slot/TO.

As shown in Alternative 2-1 of FIG. 13, the time window including the i-1-th slot/TO is terminated, and the boundaries of the previously configured time window is maintained from the subsequent i-th slot/TO. Alternatively, as shown in Alternative 2-2 of FIG. 13, the time window including the i-th slot/TO may be terminated, and the boundary of the previously configured time window may be maintained from the subsequent i+1-th slot/TO.

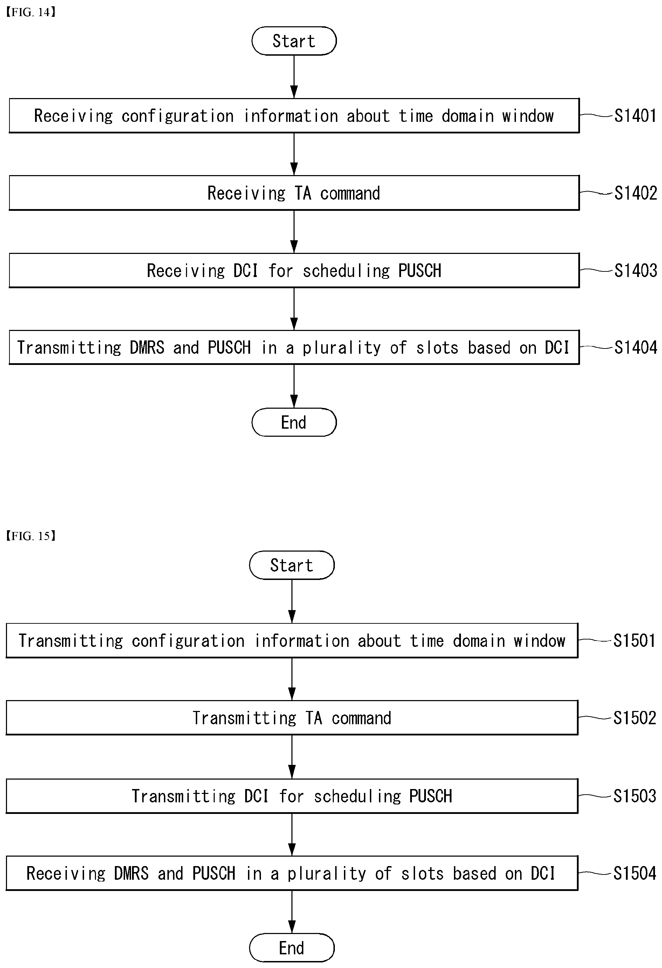

FIG. 14 is a flowchart to explain an operation method of a UE proposed in the present disclosure.

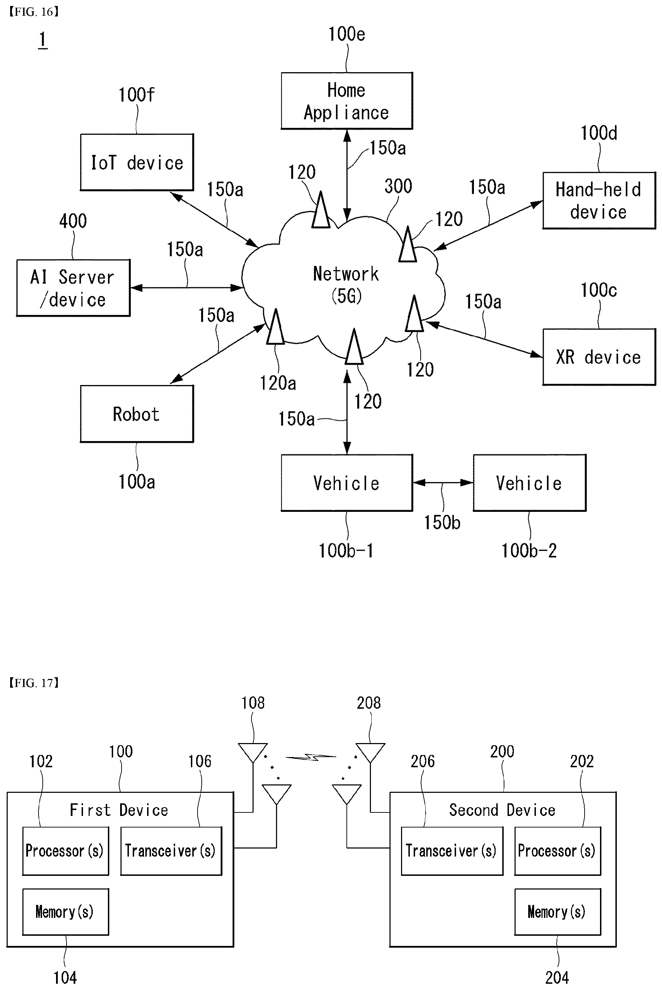

Referring to FIG. 14, first, the UE (100/200 in FIGS. 16 to 19) receives configuration information about a time domain window from the base station in step S1401. The configuration information includes information about the length of the time domain window. The length of the time domain window is configured as a plurality of slots. For example, the length of the time domain window may be configured in slot units.

And/or, the time domain window may be a time domain window for demodulation reference signal (DMRS) bundling/inter-slot bundling/joint channel estimation.

For example, the operation of receiving configuration information by the UE in step S1401 may be implemented by the device of FIGS. 16 to 19 described above. For example, referring to FIG. 17, one or more processors 102/202 may control one or more memories 104/204 and/or one or more transceivers 106/206, etc. to receive the configuration information.

The UE (100/200 in FIGS. 16 to 19) receives a timing advance (TA) command from the base station in step S1402.

For example, the operation of receiving the TA command by the UE in step S1402 may be implemented by the device of FIGS. 16 to 19 described above. For example, referring to FIG. 17, one or more processors 102/202 may control one or more memories 104/204 and/or one or more transceivers 106/206. etc. to receive the TA command.

The UE (100/200 in FIGS. 16 to 19) receives downlink control information (DCI) for scheduling the PUSCH from the base station in step S1403.

For example, the operation of receiving DCI by the UE in step S1403 may be implemented by the device of FIGS. 16 to 19 described above. For example, referring to FIG. 17, one or more processors 102/202 may control one or more memories 104/204 and/or one or more transceivers 106/206, etc. to receive the DCI.

The UE (100/200 in FIGS. 16 to 19) transmits a demodulation reference signal (DMRS) and PUSCH to the base station in a plurality of slots based on DCI in step S1404. For example, DMRS and/or PUSCH may be mapped and transmitted to each slot included in the plurality of slots. And/or, DMRS and/or PUSCH may be transmitted repeatedly over the plurality of slots.

And based on the TA command being applied in a slot among the plurality of slots, the DMRS in the slot is transmitted based on differential encoding. For example, the TA command is received before the time domain window, but the application time of the TA command may be the slot. And/or, the differential encoding may mean putting a preconfigured phase difference between the DMRS of the slot (e.g. the i-th slot) and the DMRS of the previous slot (e.g. the i-1-th slot). And/or, the differential encoding may mean that the DMRS of the slot (e.g. the i-th slot) and the DMRS of the previous slot (e.g. the i-1-th slot) are encoded with a preconfigured phase difference.

For example, the DMRS of the slot and the DMRS of the previous slot may have a preconfigured phase difference. And/or, the previous slot may be included in the plurality of slots. For example, the previous slot may be a slot within a time domain window.

Based on the TA command, the time domain window is divided into a first time domain window that ends before the slot and a second time domain window that starts from the slot. That is, based on the TA command, the time domain window is divided into the first time domain window and the second time domain window.

Based on differential decoding, the distinction between the first time domain window and the second time domain window is indicated to the base station. That is, the base station may check the phase change of the DMRS and determine the first time domain window and the second time domain window.

And/or, the first time domain window and/or the second time domain window may be a time domain window for DMRS bundling/inter-slot bundling/joint channel estimation. That is, each of the first time domain window and the second time domain window may be used separately for DMRS bundling/inter-slot bundling/joint channel estimation.

And/or, based on the length of the time domain window being configured as n (>=1) slots, the second time domain window may end from the slot to the n-th slot, or end from the start slot of the start area window to the n-th slot.

And/or, in the first time domain window or the second time domain window, the same phase and transmission power may be maintained. That is, the same phase and transmission power are not maintained within the time domain window based on the TA command, but the same phase and transmission power may be maintained in each of the first time domain window or the second time domain window

For example, the operation of transmitting DMRS and PUSCH by the UE in step S1404 may be implemented by the device of FIGS. 16 to 19 described above. For example, referring to FIG. 17, one or more processors 102/202 may control one or more memories 104/204 and/or one or more transceivers 106/206, etc. to transmit the DMRS and PUSCH.

The operation method of FIG. 14 is described with a focus on DMRS/PUSCH transmission, but it goes without saying that it may also be applied to the DMRS/PUCCH.

The operation method of FIG. 14 is described focusing on an example in which transmission characteristics change according to the application of the TA command, but the operation method of FIG. 14 may be applied even in situations where other transmission characteristics change.

Since the operation of the UE described with reference to FIG. 14 is the same as the operation (e.g. the first to sixth embodiments) of the UE described with reference to FIGS. 1 to 13, further detailed description will be omitted.

The signaling and operations described above may be implemented by devices to be described below (e.g. FIGS. 16 to 19). For example, the signaling and operations described above may be processed by one or more processors of FIGS. 16 to 19, and the signaling and operations described above may be stored in memory in the form of instructions/programs (e.g. instruction, executable code) for driving at least one processor of FIGS. 16 to 19.

A processing apparatus configured to control a user equipment (UE) to transmit a PUSCH in a wireless communication system, the processing apparatus comprises at least one processor, and at least one memory operably connected to the at least one processor, and storing instructions for performing operations based on being executed by the at least one processor, wherein the operations include receiving configuration information about a time domain window from a base station, wherein a length of the time domain window is configured as a plurality of slots, receiving a TA command from the base station, receiving DCI for scheduling the PUSCH from the base station, and transmitting a DMRS and the PUSCH to the base station in the plurality of slots based on the DCI, wherein, based on the TA command being applied in a slot among the plurality of slots, the DMRS in the slot may be transmitted based on differential encoding.

For example, a computer-readable storage medium storing at least one instruction, wherein the least one instruction causes at least one processor to control operations based on being executed by the at least one processor, wherein the operations may include receiving configuration information about a time domain window from a base station, wherein a length of the time domain window is configured as a plurality of slots, receiving a TA command from the base station, receiving DCI for scheduling a PUSCH from the base station, and transmitting a DMRS and the PUSCH to the base station in the plurality of slots based on the DCI, wherein, based on the TA command being applied in a slot among the plurality of slots, the DMRS in the slot may be transmitted based on differential encoding.

FIG. 15 is a flowchart for explaining an operation method of a base station proposed in the present disclosure.

Referring to FIG. 15, first, the base station (100/200 in FIGS. 16 to 19) transmits configuration information about a time domain window to the UE in step S1501. The configuration information includes information about a length of the time domain window. The length of the time domain window is configured as a plurality of slots. For example, the length of the time domain window may be configured in slot units.

And/or, the time domain window may be a time domain window for demodulation reference signal (DMRS) bundling/inter-slot bundling/joint channel estimation.

For example, the operation of transmitting configuration information by the base station in step S1501 may be implemented by the device of FIGS. 16 to 19 described above. For example, referring to FIG. 17, one or more processors 102/202 may control one or more memories 104/204 and/or one or more transceivers 106/206, etc. to transmit the configuration information.

The base station (100/200 in FIGS. 16 to 19) transmits a timing advance (TA) command to the UE in step S1502.

For example, the operation of transmitting the TA command by the base station in step S1502 may be implemented by the device of FIGS. 16 to 19 described above. For example, referring to FIG. 17, one or more processors 102/202 may control one or more memories 104/204 and/or one or more transceivers 106/206, etc. to transmit the TA command.

The base station (100/200 in FIGS. 16 to 19) transmits downlink control information (DCI) for scheduling the PUSCH to the UE in step S1503.

For example, the operation of transmitting DCI by the base station in step S1503 may be implemented by the device of FIGS. 16 to 19 described above. For example, referring to FIG. 17, one or more processors 102/202 may control one or more memories 104/204 and/or one or more transceivers 106/206. etc. to transmit the DCI.

The base station (100/200 in FIGS. 16 to 19) receives a demodulation reference signal (DMRS) and PUSCH from the UE in a plurality of slots based on the DCI in step S1504. For example, the DMRS and/or PUSCH may be received by being mapped to each slot included in the plurality of slots. And/or, the DMRS and/or PUSCH may be received repeatedly over the plurality of slots.

And, based on the TA command being applied in a slot among the plurality of slots, the DMRS in the slot is received based on differential encoding. For example, the TA command may be received before the time domain window, but the application time of the TA command may be at the slot. And/or, differential encoding may mean putting a preconfigured phase difference between the DMRS of the slot (e.g. the i-th slot) and the DMRS of the previous slot (e.g. the i-1-th slot). And/or, the differential encoding may mean that the DMRS of the slot (e.g. the i-th slot) and the DMRS of the previous slot (e.g. the i-1-th slot) are encoded with a preconfigured phase difference.

For example, the DMRS of the slot and the DMRS of the previous slot may have a preconfigured phase difference. And/or, the previous slot may be included in the plurality of slots. For example, the previous slot may be a slot within the time domain window.

Based on the TA command, the time domain window is divided into a first time domain window that ends before the slot and a second time domain window that starts from the slot. That is based on the TA command, the time domain window is divided into the first time domain window and the second time domain window.

Based on the differential decoding, the distinction between the first time domain window and the second time domain window is indicated to the base station. That is, the base station may check the phase change of the DMRS and determine the first domain window and the second time domain window.

And/or, the first time domain window and/or the second time domain window may be a time domain window for DMRS bundling/inter-slot bundling/joint channel estimation. That is, each of the first time domain window and the second time domain window may be used separately for the DMRS bundling/inter-slot bundling/joint channel estimation.

And/or, based on the length of the time domain window being configured as n (>=1) slots, the second time domain window may start from the slot and end at the n-th slot, or start from the start slot of the start area window and end at the n-th slot.

And/or, in the first time domain window or the second time domain window, the same phase and transmission power may be maintained. That is, based on the TA command, the same phase and transmission power may not be maintained within the time domain window, but the same phase and transmission power may be maintained in each of the first time domain window or the second time domain window.

For example, the operation of receiving DMRS and PUSCH by the base station in step S1504 may be implemented by the devices of FIGS. 16 to 19 described above. For example, referring to FIG. 17, one or more processors 102/202 may control one or more memories 104/204 and/or one or more transceivers 106/206, etc. to receive the DMRS and PUSCH.

The operation method in FIG. 15 is described focusing on DMRS/PUSCH reception, but it goes without saying that it may also be applied to DMRS/PUCCH.

The operation method in FIG. 15 is described focusing on an example in which transmission characteristics change according to the application of the TA command, but the operation method of FIG. 15 may be applied even in situations where other transmission characteristics change.

Since the operation of the base station described with reference to FIG. 15 is the same as the operation of the UE described with reference to FIGS. 1 to 14 (e.g. first to sixth embodiments), detailed descriptions other than this will be omitted.

The signaling and operations described above may be implemented by devices to be described below (e.g. FIGS. 16 to 19). For example, the signaling and operations described above may be processed by one or more processors of FIGS. 16 to 19, and the signaling and operations described above may be stored in memory in the form of instructions/programs (e.g. instructions, executable code) for driving at least one processor of FIGS. 16 to 19.

For example, a processing apparatus configured to control a base station to receive PUSCH in a wireless communication system, the processing apparatus may comprise at least one processor, and at least one memory operably connected to the at least one processor, and storing instructions for performing operations based on being executed by the at least one processor, wherein the operations may include transmitting configuration information about a time domain window to a user equipment (UE), wherein a length of the time domain window is configured as a plurality of slots, transmitting a TA command to the UE, transmitting DCI for scheduling the PUSCH to the UE, and receiving a DMRS and the PUSCH from the UE in the plurality of slots based on the DCI, wherein, based on the TA command being applied in a slot among the plurality of slots, the DMRS in the slot may be received based on differential encoding.

For example, a computer-readable storage medium storing at least one instruction, wherein the least one instruction causes at least one processor to control operations based on being executed by the at least one processor, wherein the operations may include transmitting configuration information about a time domain window to a user equipment (UE), wherein a length of the time domain window is configured as a plurality of slots, transmitting a TA command to the UE, transmitting DCI for scheduling the PUSCH to the UE, and receiving a DMRS and the PUSCH from the UE in the plurality of slots based on the DCI, wherein, based on the TA command being applied in a slot among the plurality of slots, the DMRS in the slot may be received based on differential encoding.

**Example of communication system to which the present disclosureis is applied**

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-description, the same reference symbols may denote the same or corresponding hardware blocks, software blocks, or functional blocks unless described otherwise.

FIG. 16 shows a communication system 1 based on an embodiment of the present disclosure.

Referring to FIG. 16, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

## Example of wireless device to which the present disclosureis is applied

FIG. 17 illustrates wireless devices based on an embodiment of the present disclosure.

Referring to FIG. 17, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modern/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) based on the descriptions, functions, procedures, proposals, methods, and/or operational flowcharts disclosed in this document. The one or more processors 102 and 202 may generate messages, control information, data, or information based on the descriptions, functions, procedures, proposals, methods, and/or operational flowcharts disclosed in this document. The one or more processors 102 and 202 may generate signals (e.g., baseband signals) including PDUs, SDUs, messages, control information, data, or information based on the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information based on the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels. etc. processed using the one or more processors 102 and 202 from the base band signals into the RF band signals. To this end, the one or more transceivers 106 and 206 may include (analog) oscillators and/or filters.

**Application** example **of** wireless device to **which the** present disclosureis is applied

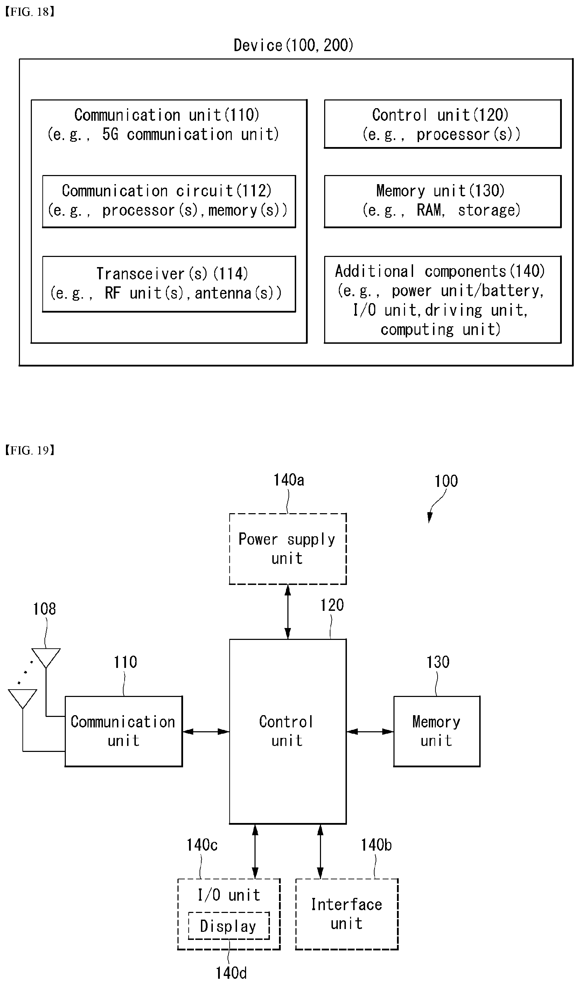

FIG. 18 illustrates another example of a wireless device based on an embodiment of the present disclosure. The wireless device may be implemented in various forms based on a use-case/service.

Referring to FIG. 18, wireless devices 100 and 200 may correspond to the wireless devices 100 and 200 of FIG. 17 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 17. For example, the transceiver(s) 114 may include the one or more transceivers 106 and 206 and/or the one or more antennas 108 and 208 of FIG. 17. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured based on types of wireless devices. For example, the additional components 140 may include at least one of a power unitibattery, input/output (I/O) unit, a driving unit, and a computing unit. The wireless device may be implemented in the form of, without being limited to, the robot (100a of FIG. 16), the vehicles (100b-1 and 100b-2 of FIG. 16), the XR device (100c of FIG. 16), the hand-held device (100d of FIG. 16), the home appliance (100e of FIG. 16), the IoT device (100f of FIG. 16), a digital broadcast terminal, a hologram device, a public safety device, an MTC device, a medicine device, a fintech device (or a finance device), a security device, a climate/environment device, the AI server/device (400 of FIG. 16), the BSs (200 of FIG. 16), a network node, etc. The wireless device may be used in a mobile or fixed place based on a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

**Example of mobile device to which the present disclosureis is applied**

FIG. 19 shows a hand-held device based on an embodiment of the present disclosure. The hand-held device may include a smartphone, a smart pad, a wearable device (e.g., a smart watch or a smart glasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 19, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 18, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

A wireless communication technology implemented by a wireless device (e.g., 100, 200) according to the present disclosure may include narrowband Internet of Things for low power communication in addition to LTE, NR and 6G. In this case, for example, the NB-IoT technology may be an example of a low power wide area network (LPWAN) technology and may be implemented by standards such as LTE Cat NB1 and/or LTE Cat NB2, and the present disclosure is not limited to the aforementioned names. Additionally or alternatively, the wireless communication technology implemented by the wireless device (e.g., 100, 200) according to the present disclosure may perform communication based on the LTE-M technology. In this case, for example, the LTE-M technology may be an example of the LPWAN technology and may be called various names, such as enhanced Machine Type Communication (eMTC). For example, the LTE-M technology may be implemented by at least one of various standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and the present disclosure is not limited to the aforementioned names. Additionally or alternatively, the wireless communication technology implemented by the wireless device (e.g., 100, 200) according to the present disclosure may include at least one of ZigBee, Bluetooth and a low power wide area network (LPWAN) in which low power communication is considered, and the present disclosure is not limited to the aforementioned names. For example, the ZigBee technology may generate personal area networks (PAN) related to small/low-power digital communication based on various standards such as IEEE 802.15.4, and may be called various names.

The embodiments described above are implemented by combinations of components and features of the present disclosure in predetermined forms. Each component or feature should be considered selectively unless specified separately. Each component or feature can be carried out without being combined with another component or feature. Moreover, some components and/or features are combined with each other and can implement embodiments of the present disclosure. The order of operations described in embodiments of the present disclosure can be changed. Some components or features of one embodiment may be included in another embodiment, or may be replaced by corresponding components or features of another embodiment. It is apparent that some claims referring to specific claims may be combined with another claims referring to the claims other than the specific claims to constitute the embodiment or add new claims by means of amendment after the application is filed.

Embodiments of the present disclosure can be implemented by various means, for example, hardware, firmware, software, or combinations thereof. When embodiments are implemented by hardware, one embodiment of the present disclosure can be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and the like.

When embodiments are implemented by firmware or software, one embodiment of the present disclosure can be implemented by modules, procedures, functions, etc. performing functions or operations described above. Software code can be stored in a memory and can be driven by a processor. The memory is provided inside or outside the processor and can exchange data with the processor by various well-known means.

It is apparent to those skilled in the art that the present disclosure can be embodied in other specific forms without departing from essential features of the present disclosure. Accordingly, the above detailed description should not be construed as limiting in all aspects and should be considered as illustrative. The scope of the present disclosure should be determined by rational construing of the appended claims, of the present disclosure.

[Industrial Applicability]

Although a method of transmitting and receiving a PUSCH in a wireless communication system according to the present disclosure has been described focusing on examples applying to the 3GPP LTE/LTE-A system and 5G system (new RAT system), the present disclosure can be applied to various wireless communication systems, such as beyond 5G, 6G, and beyond 6G, in addition to the systems described above.

**Claims**

1. A method performed by a user equipment, UE, the method comprising:

   receiving (S1401) configuration information related to a length of a time domain window from a base station, wherein the length of the time domain window is configured as a plurality of slots;
   receiving (S1402) a timing advance, TA, command from the base station;
   receiving (S1403) downlink control information, DCI, for scheduling a physical uplink shared channel, PUSCH, from the base station; and
   transmitting (S1404) a demodulation reference signal, DMRS, and the PUSCH to the base station in the plurality of slots based on the DCI,
   wherein, based on the TA command being applied in a slot among the plurality of slots, the DMRS in the slot is transmitted based on differential encoding,
   wherein, based on the TA command, the time domain window is divided into a first time domain window that ends before the slot and a second time domain window that starts from the slot,
   wherein, based on differential decoding of the base station, a distinction between the first time domain window and the second time domain window is indicated to the base station.

2. The method of claim 1, wherein the DMRS in the slot and a DMRS of the previous slot have a preconfigured phase difference.

3. The method of claim 2, wherein the previous slot is included in the plurality of slots.

4. The method of claim 1, wherein the first time domain window and/or the second time domain window are time domain windows for DMRS bundling.

5. The method of claim 1, wherein, based on the length of the time domain window being configured as n slots, the second time domain window ends at an n-th slot from the slot, or ends at an n-th slot from a starting slot of the time domain window.

6. The method of claim 1, wherein a same phase and transmission power are maintained in the first time domain window or the second time domain window.

7. A user equipment, UE, (100) comprising:

   at least one transceiver (106);
   at least one processor (102); and
   at least one memory (104) operably connected to the at least one processor (102), and
   storing instructions for performing operations based on being executed by the at least one processor (102),
   wherein the operations includes:

      receiving configuration information related to a length of a time domain window from a base station, wherein the length of the time domain window is configured as a plurality of slots;
      receiving a timing advance, TA, command from the base station;
      receiving downlink control information, DCI, for scheduling a physical uplink shared channel, PUSCH, from the base station; and
      transmitting a demodulation reference signal, DMRS, and the PUSCH to the base station in the plurality of slots based on the DCI,
      wherein, based on the TA command being applied in a slot among the plurality of slots, the DMRS in the slot is transmitted based on differential encoding,
      wherein, based on the TA command, the time domain window is divided into a first time domain window that ends before the slot and a second time domain window that starts from the slot,
      wherein, based on differential decoding of the base station, a distinction between the first time domain window and the second time domain window is indicated to the base station.

8. A method performed by a base station, BS, the method comprising:

   transmitting (S1501) configuration information related to a length of a time domain window to a user equipment, UE, wherein the length of the time domain window is configured as a plurality of slots;

transmitting (S1502) a timing advance, TA, command to the UE;

transmitting (S1503) downlink control information, DCI, for scheduling a physical uplink shared channel, PUSCH, to the UE; and

receiving (S1504) a demodulation reference signal, DMRS, and the PUSCH from the UE in the plurality of slots based on the DCI,

wherein, based on the TA command being applied in a slot among the plurality of slots, the DMRS in the slot is received based on differential encoding,

wherein, based on the TA command, the time domain window is divided into a first time domain window that ends before the slot and a second time domain window that starts from the slot,

wherein, based on differential decoding of the base station, a distinction between the first time domain window and the second time domain window is indicated to the base station.

9. The method of claim 8, wherein the DMRS in the slot and a DMRS of the previous slot have a preconfigured phase difference.

10. The method of claim 9, wherein the previous slot is included in the plurality of slots.

11. The method of claim 8, wherein the first time domain window and/or the second time domain window are time domain windows for DMRS bundling.

**Patentansprüche**

1. Verfahren, welches durch eine Nutzervorrichtung (UE) durchgeführt wird, wobei das Verfahren umfasst:

Erhalten (S1401) von Konfigurationsinformationen, welche sich auf eine Länge eines Zeitdomänenfensters beziehen, von einer Basisstation, wobei die Länge des Zeitdomänenfensters als eine Mehrzahl von Schlitzen eingerichtet ist;

Erhalten (S1402) eines Timing-Advance-(TA)-Befehls von der Basisstation;

Erhalten (S1403) von Downlink-Steuerungsinformationen (DCI) zum Planen eines physischen Uplink-Shared-Kanals (PUSCH) von der Basisstation; und

Übermitteln (S1404) eines Demodulationsreferenzsignals (DMRS) und des PUSCHs an die Basisstation in der Mehrzahl von Schlitzen basierend auf den DCI,

wobei, basierend darauf, dass der TA-Befehl in einem Schlitz unter der Mehrzahl von Schlitzen angewandt wird, das DMRS in dem Schlitz basierend auf einer Differenzcodierung übermittelt wird, wobei, basierend auf dem TA-Befehl, das Zeitdomänenfenster in ein erstes Zeitdomänenfenster, welches vor dem Schlitz endet, und ein zweites Zeitdomänenfenster unterteilt wird, welches ab dem Schlitz beginnt,

wobei der Basisstation, basierend auf einer Differenz-Decodierung der Basisstation, eine Unterscheidung zwischen dem ersten Zeitdomänenfenster und dem zweiten Zeitdomänenfenster angezeigt wird.

2. Verfahren nach Anspruch 1, wobei das DMRS in dem Schlitz und ein DMRS des vorherigen Schlitzes einen voreingestellten Phasenunterschied aufweisen.

3. Verfahren nach Anspruch 2, wobei der vorherige Schlitz in der Mehrzahl von Schlitzen umfasst ist.

4. Verfahren nach Anspruch 1, wobei das erste Zeitdomänenfenster und/oder das zweite Zeitdomänenfenster Zeitdomänenfenster für eine DMRS-Bündelung sind.

5. Verfahren nach Anspruch 1, wobei, basierend darauf, dass die Länge des Zeitdomänenfensters als n Schlitze eingerichtet ist, das zweite Zeitdomänenfenster an einem n-ten Schlitz ab dem Schlitz endet oder an einem n-ten Schlitz ab einem Startschlitz des Zeitdomänenfensters endet.

6. Verfahren nach Anspruch 1, wobei eine gleiche Phase und Übertragungsleistung in dem ersten Zeitdomänenfenster oder dem zweiten Zeitdomänenfenster beibehalten werden.

7. Nutzervorrichtung (UE) (100), umfassend:

wenigstens einen Transceiver (106);

wenigstens einen Prozessor (102); und

wenigstens einen Speicher (104), welcher betriebsfähig mit dem wenigstens einen Prozessor (102) verbunden ist und Instruktionen speichert zum Durchführen von Operationen basierend darauf, dass sie durch den wenigstens einen Prozessor (102) ausgeführt werden,

wobei die Operationen umfassen:

Erhalten von Konfigurationsinformationen, welche sich auf eine Länge eines Zeitdomänenfensters beziehen, von einer Basisstation, wobei die Länge des Zeitdomänenfensters als eine Mehrzahl von Schlitzen eingerichtet ist;

Erhalten eines Timing-Advance-(TA)-Befehls von der Basisstation;

Erhalten von Downlink-Steuerungsinformationen (DCI) zum Planen eines physischen Uplink-Shared-Kanals (PUSCH) von der Basisstation; und

Übermitteln eines Demodulationsreferenzsignals (DMRS) und des PUSCHs an die Basisstation in der Mehrzahl von Schlitzen basierend auf den DCI,

wobei, basierend darauf, dass der TA-Befehl in einem Schlitz unter der Mehrzahl von Schlitzen angewandt wird, das DMRS in dem Schlitz basierend auf einer Differenzcodierung übermittelt wird,

wobei, basierend auf dem TA-Befehl, das Zeitdomänenfenster in ein erstes Zeitdomänenfenster, welches vor dem Schlitz endet, und ein zweites Zeitdomänenfenster unterteilt wird, welches ab dem Schlitz beginnt,

wobei der Basisstation, basierend auf einer Differenz-Decodierung der Basisstation, eine Unterscheidung zwischen dem ersten Zeitdomänenfenster und dem zweiten Zeitdomänenfenster angezeigt wird.

8. Verfahren, welches durch eine Basisstation (BS) durchgeführt wird, wobei das Verfahren umfasst:

Übermitteln (S1501) von Konfigurationsinformationen, welche sich auf eine Länge eines Zeitdomänenfensters beziehen, an eine Nutzervorrichtung (UE), wobei die Länge des Zeitdomänenfensters als eine Mehrzahl von Schlitzen eingerichtet ist;

Übermitteln (S1502) eines Timing-Advance-(TA)-Befehls an die UE;

Übermitteln (S1503) von Downlink-Steuerungsinformationen (DCI) zum Planen eines physischen Uplink-Shared-Kanals (PUSCH) an die UE; und Erhalten (S1504) eines Demodulationsreferenzsignals (DMRS) und des PUSCHs von der UE in der Mehrzahl von Schlitzen basierend auf den DCI,

wobei, basierend darauf, dass der TA-Befehl in einem Schlitz unter der Mehrzahl von Schlitzen angewandt wird, das DMRS in dem Schlitz basierend auf einer Differenzcodierung erhalten wird,

wobei, basierend auf dem TA-Befehl, das Zeitdomänenfenster in ein erstes Zeitdomänenfenster, welches vor dem Schlitz endet, und ein zweites Zeitdomänenfenster unterteilt wird, welches ab dem Schlitz beginnt,

wobei der Basisstation, basierend auf einer Differenz-Decodierung der Basisstation, eine Unterscheidung zwischen dem ersten Zeitdomänenfenster und dem zweiten Zeitdomänenfenster angezeigt wird.

9. Verfahren nach Anspruch 8, wobei das DMRS in dem Schlitz und ein DMRS des vorherigen Schlitzes einen voreingestellten Phasenunterschied aufweisen.

10. Verfahren nach Anspruch 9, wobei der vorherige Schlitz in der Mehrzahl von Schlitzen umfasst ist.

11. Verfahren nach Anspruch 8, wobei das erste Zeitdomänenfenster und/oder das zweite Zeitdomänenfenster Zeitdomänenfenster für eine DMRS-Bündelung sind.

**Revendications**

1. Procédé réalisé par un équipement utilisateur, UE, le procédé comprenant :

la réception (S1401) d'informations de configuration relatives à une longueur d'une fenêtre de domaine temporel provenant d'une station de base, dans lequel la longueur de la fenêtre de domaine temporel est configurée sous forme d'une pluralité de créneaux ;

la réception (S1402) d'une instruction d'avance temporelle, TA, provenant de la station de base ;

la réception (S1403) d'informations de contrôle de liaison descendante, DCI, pour programmer un canal partagé de liaison montante physique, PUSCH, provenant de la station de base ; et

la transmission (S1404) d'un signal de référence de démodulation, DMRS, et du PUSCH à la station de base dans la pluralité de créneaux sur la base des DCI,

dans lequel, sur la base de l'instruction TA appliquée dans un créneau parmi la pluralité de créneaux, le DMRS dans le créneau est transmis sur la base d'un codage différentiel,

dans lequel, sur la base de l'instruction TA, la fenêtre de domaine temporel est divisée en une première fenêtre de domaine temporel qui se termine avant le créneau et une seconde fenêtre de domaine temporel qui commence à partir du créneau,

dans lequel, sur la base d'un décodage différentiel de la station de base, une distinction entre la première fenêtre de domaine temporel et la seconde fenêtre de domaine temporel est indiquée à la station de base.

2. Procédé selon la revendication 1, dans lequel le DMRS dans le créneau et un DMRS du créneau précédent ont une différence de phase pré-configurée,

3. Procédé selon la revendication 2, dans lequel le créneau précédent est compris dans la pluralité de créneaux.

4. Procédé selon la revendication 1, dans lequel la première fenêtre de domaine temporel et/ou la seconde fenêtre de domaine temporel sont des fenêtres de domaine temporel pour un regroupement de DMRS.

5. Procédé selon la revendication 1, dans lequel, sur la base de la longueur de la fenêtre de domaine temporel qui est configurée sous forme de n créneaux, la seconde fenêtre de domaine temporel se termine à un n-ème créneau par rapport au créneau, ou se termine à un n-ème créneau par rapport à un créneau de début de la fenêtre de domaine temporel.

6. Procédé selon la revendication 1, dans lequel une même phase et une même puissance de transmission sont maintenues dans la première fenêtre de domaine temporel ou la seconde fenêtre de domaine temporel.

7. Équipement utilisateur, UE, (100), comprenant :

au moins un émetteur-récepteur (106) ;
au moins un processeur (102) ; et
au moins une mémoire (104) connectée de manière opérationnelle audit au moins un processeur (102), et stockant d'instructions pour effectuer des opérations sur la base de leur exécution par ledit au moins un processeur (102),
dans lequel les opérations comportent :

la réception d'informations de configuration relatives à une longueur d'une fenêtre de domaine temporel provenant d'une station de base, dans lequel la longueur de la fenêtre de domaine temporel est configurée sous forme d'une pluralité de créneaux ;
la réception d'une instruction d'avance temporelle, TA, provenant de la station de base ;
la réception d'informations de contrôle de liaison descendante, DCI, pour programmer un canal partagé de liaison montante physique, PUSCH, provenant de la station de base ; et
la transmission d'un signal de référence de démodulation, DMRS, et du PUSCH à la station de base dans la pluralité de créneaux sur la base des DCI,
dans lequel, sur la base de l'instruction TA appliquée dans un créneau parmi la pluralité de créneaux, le DMRS dans le créneau est transmis sur la base d'un codage différentiel,
dans lequel, sur la base de l'instruction TA, la fenêtre de domaine temporel est divisée en une première fenêtre de domaine temporel qui se termine avant le créneau et une seconde fenêtre de domaine temporel qui commence à partir du créneau,
dans lequel, sur la base d'un décodage différentiel de la station de base, une distinction entre la première fenêtre de domaine temporel et la seconde fenêtre de domaine temporel est indiquée à la station de base.

8. Procédé réalisé par une station de base, BS, le procédé comprenant :

la transmission (S1501) d'informations de configuration relatives à une longueur d'une fenêtre de domaine temporel à un équipement utilisateur, UE, dans lequel la longueur de la fenêtre de domaine temporel est configurée sous forme d'une pluralité de créneaux ;
la transmission (S1502) d'une instruction d'avance temporelle, TA, à l'UE ;
la transmission (S1503) d'informations de contrôle de liaison descendante, DCI, pour programmer un canal partagé de liaison montante physique, PUSCH, à l'UE ; et

la réception (S1504) d'un signal de référence de démodulation, DMRS, et du PUSCH en provenance de l'UE dans la pluralité de créneaux sur la base des DCI,

dans lequel, sur la base de l'instruction TA appliquée dans un créneau parmi la pluralité de créneaux, le DMRS dans le créneau est reçu sur la base d'un codage différentiel,

dans lequel, sur la base de l'instruction TA, la fenêtre de domaine temporel est divisée en une première fenêtre de domaine temporel qui se termine avant le créneau et une seconde fenêtre de domaine temporel qui commence à partir du créneau,

dans lequel, sur la base d'un décodage différentiel de la station de base, une distinction entre la première fenêtre de domaine temporel et la seconde fenêtre de domaine temporel est indiquée à la station de base.

9. Procédé selon la revendication 8, dans lequel le DMRS dans le créneau et un DMRS du créneau précédent ont une différence de phase pré-configurée.

10. Procédé selon la revendication 9, dans lequel le créneau précédent est compris dans la pluralité de créneaux.

11. Procédé selon la revendication 8, dans lequel la première fenêtre de domaine temporel et/ou la seconde fenêtre de domaine temporel sont des fenêtres de domaine temporel pour un regroupement de DMRS.

【FIG. 1】

【FIG. 2】

| Downlink Frame i |
|---|

| Uplink Frame i |
|---|

$N_{TA}T_s$

【FIG. 3】

Fixed Size

Size depends on subcarrier spacing

Radio Frame 10ms

Subframe 1ms

Subframe = {1, 2, 4} Slots — 0 1 2 3 4 5 6 7 8 9

Slot = {7, 14} Symbols — Slot — 0 1 2 3

Symbol — 0 1 2 3 4 5 6 7 8 9 10 11 12 13

Mini-Slot (URLLC)

Mini-Slot = {2, 4, 7} Symbols – ffs

【FIG. 4】

One subframe

$14 \cdot 2^{\mu}$ OFDM symbol

$k = N_{RB}^{\mu} N_{SC}^{RB} - 1$

Resource Block

Resource Element
-In case of resource grid,, $(k, \bar{l})$
-In case of resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

【FIG. 5】

【FIG. 6】

Antenna Port A
Antenna Port B } Numerology X

Antenna Port A
Antenna Port B } Numerology Y

【FIG. 7】

【FIG. 8】

PUSCH repetition type A

【FIG. 9】

1 slot

10 sym.

7 sym.

| $N_0$ | $N_1$ | $N_2$ |

(a) Nominal repetition

10 sym.

7 sym.

| $A_0$ | $A_1$ | $A_2$ | $A_3$ |

(b) Actual repetition

EP 4 319 021 B1

[FIG. 10]

symbols relative to slot boundary
Mapping type A, $I^0=2$

symbols relative to transmission start
Mapping type B

Double-symbol DM-RS

Single-symbol DM-RS

42

【FIG. 11】

[FIG. 12]

EP 4 319 021 B1

44

【FIG. 13】

i-th slot Differential DMRS

Original time window

Alternative 1-1

Alternative 1-2

Alternative 2-1

Alternative 2-2

45

【FIG. 14】

Start

Receiving configuration information about time domain window ——S1401

Receiving TA command ——S1402

Receiving DCI for scheduling PUSCH ——S1403

Transmitting DMRS and PUSCH in a plurality of slots based on DCI ——S1404

End

【FIG. 15】

Start

Transmitting configuration information about time domain window ——S1501

Transmitting TA command ——S1502

Transmitting DCI for scheduling PUSCH ——S1503

Receiving DMRS and PUSCH in a plurality of slots based on DCI ——S1504

End

[FIG. 16]

1

[FIG. 17]

【FIG. 18】

Device(100, 200)

| Communication unit(110)<br>(e.g., 5G communication unit) | Control unit(120)<br>(e.g., processor(s)) |
|---|---|
| Communication circuit(112)<br>(e.g., processor(s),memory(s)) | Memory unit(130)<br>(e.g., RAM, storage) |
| Transceiver(s)(114)<br>(e.g., RF unit(s),antenna(s)) | Additional components(140)<br>(e.g., power unit/battery,<br>I/O unit,driving unit,<br>computing unit) |

【FIG. 19】

**EP 4 319 021 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **INTERDIGITAL INC**. Discussions on joint channel estimation for PUSCH. *3GPP DRAFT; R1-2100733, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE*, 19 January 2021, vol. RAN WG1 (e-Meeting), https://ftp.3gpp.org/tsg_ran/WG1_RL1/TSGR1_104-e/Docs/ R1-2100733.zipR1-2100733_104e_ COV AI8813 PUSCH DM RSBU NDLE FINAL.docx

- **CATT**. Joint channel estimation for PUSCH. *3GPP DRAFT; R1-2100399, 3RD GENERATION PART-NERSHIP PROJECT (3GPP), MOBILE COMPE-TENCE CENTRE ; 650, ROUTE DES LUCIOLES ; F-06921 SOPHIA-ANTIPOLIS CEDEX ; FRANCE*, 19 January 2021, vol. RAN WG1 (e-Meeting), https://ftp.3gpp.org/tsg_ran/WG1_RL1/TSGR1_104-e/Docs/ R1-2100399.zip R1-2100399.docx

- **CHINA TELECOM**. 104-e-NR-CovEnh-03] Summary of email discussion on joint channel estimation for PUSCH. *3GPP Draft; R1-2102161, 3rd Generation Partnership Project (3GPP), Mobile Competence Centre ; 650, route des Lucioles ; F-06921 Sophia-Antipolis Cedex ; France*, 08 February 2021, vol. RAN WG1 (E-Meeting)